# EUROPÄISCHE PATENTANMELDUNG

(11) **EP 4 792 700 A1**
(43) Veröffentlichungstag der Anmeldung: **19.08.2026**
(21) Anmeldenummer: 25157604.7
(22) Anmeldetag: 13.02.2025
(51) Int. Cl.: A47J 43/046, A47J 43/07

(54) **FUNKTIONSMODUL FÜR EIN ZUBEREITUNGSMODUL EINES KÜCHENGERÄTS, ZUBEREITUNGSMODUL, KÜCHENGERÄT UND VERFAHREN**

(71) Anmelder: Vorwerk & Co. Interholding GmbH, 42275 Wuppertal (DE)
(72) Erfinder: STEIN, Sebastian, 40545 Düsseldorf (DE); HEYNEN, Andreas, 42477 Radevormwald (DE); THIELE, Tobias, 42929 Wermelskirchen (DE); LESSEL, Thomas, 42551 Velbert (DE)
(74) Vertreter: Dr. Solf & Zapf Patent- und Rechtsanwalts PartG mbB

(57) **Zusammenfassung**

Die vorliegende Erfindung betrifft ein Funktionsmodul (6a) für ein Zubereitungsgefäß (1a) eines Zubereitungsmoduls (1) für ein Küchengerät (4), wobei sich das Funktionsmodul (6a) in einer Höhenrichtung (H) erstreckt, wobei das Funktionsmodul (6a) mindestens einen ersten Modulkörper (6b) aufweist, und wobei der erste Modulkörper (6b) mindestens einen Verriegelungsvorsprung (35) aufweist. Das Funktionsmodul (6a) zeichnet sich dadurch aus, dass mindestens ein zweiter Modulkörper (6c) vorhanden ist, dass der zweite Modulkörper (6c) mindestens einen Verriegelungsvorsprung (35) aufweist, dass der erste Modulkörper (6b) und der zweite Modulkörper (6c) derart zusammenfügbar sind, dass der Verriegelungsvorsprung (35) des ersten Modulkörpers (6b) an oder in einer gemeinsamen Ebene (E) und der Verriegelungsvorsprung (35) des zweiten Modulkörpers (6c) an oder in der Ebene (E) angeordnet ist, und dass die Ebene (E) orthogonal zur Höhenrichtung (H) ausgerichtet ist.

## Beschreibung

Die Erfindung betrifft ein Funktionsmodul für ein Zubereitungsgefäß eines Zubereitungsmoduls für ein Küchengerät. Das Funktionsmodul erstreckt sich in einer Höhenrichtung und weist mindestens einen ersten Modulkörper auf. Der Modulkörper weist mindestens einen Verriegelungsvorsprung, insbesondere zum Zusammenwirken mit einem Zubereitungsgefäß, auf. Ferner betrifft die Erfindung ein Zubereitungsmodul, ein Küchengerät sowie ein Verfahren zum Erkennen einer ordnungsgemäßen Anordnung eines Funktionsmoduls.

Küchengeräte mit Küchengerätebasis und Zubereitungsmodul, beispielsweise umfassend ein Zubereitungsgefäß und mindestens ein Funktionsmodul oder einen Deckel, sind im Stand der Technik in einer Vielzahl von Ausgestaltungen bekannt. Derartige Küchengeräte dienen dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Küchengerät weist üblicherweise eine Küchengerätebasis auf, die mindestens einen Aufnahmebereich für mindestens ein Zubereitungsmodul, z. B. mit einem Zubereitungsgefäß, bereitstellt. Der Aufnahmebereich weist häufig mindestens eine elektrische Schnittstelle auf, um ein in dem Aufnahmebereich angeordnetes Zubereitungsmodul mit mindestens einer Arbeitsspannung zu versorgen, beispielsweise für eine Heizeinrichtung des Zubereitungsmoduls, oder um beispielsweise Sensoren zu kontaktieren.

Alternativ oder zusätzlich ist im Aufnahmebereich mindestens eine mechanische Schnittstelle, z. B. eine Werkzeugschnittstelle, vorgesehen, die beispielsweise der Übertragung eines Drehmoments von einer Arbeitseinheit, z. B. eines Motors, der Küchengerätebasis beispielsweise auf ein an dem Zubereitungsmodul angeordnetes Werkzeug dient.

Um beispielsweise bei der Zubereitung von Speisen in dem Zubereitungsgefäß den Funktionsumfang des Küchengeräts zu erweitern, ist an dem Zubereitungsgefäß ein Funktionsmodul anordenbar, beispielsweise in Form einer Nudelpresse, eines Entsafters oder eines Fleischwolfs. Um eine sichere Funktion zu gewährleisten, ist das Funktionsmodul unter Verwendung mindestens eines Verriegelungsvorsprungs an dem Zubereitungsgefäß verriegelbar.

Im Stand der Technik sind bereits eine Vielzahl an Funktionsmodulen bekannt. Gleichwohl besteht stets ein Bedürfnis, bekannte Funktionsmodule, Zubereitungsmodule und Küchengeräte dahingehend zu verbessern, dass bei der Verwendung eines Funktionsmoduls ein zuverlässiger Betrieb bei hoher Betriebssicherheit gewährleistet ist.

Der Erfindung liegt daher die Aufgabe zugrunde, ein Funktionsmodul, ein Zubereitungsmodul, ein Küchengerät und ein Verfahren anzugeben, mit denen ein zuverlässiger Betrieb und eine hohe Betriebssicherheit gewährleistet werden können.

Die vorgenannte Aufgabe ist bei einem gattungsgemäßen Funktionsmodul mit dem Merkmalsinhalt des Kennzeichnungsteils des Anspruchs 1 gelöst, nämlich dadurch, dass mindestens ein zweiter Modulkörper vorhanden ist, und dass der zweite Modulkörper mindestens einen Verriegelungsvorsprung aufweist. Der erste Modulkörper und der zweite Modulkörper sind derart zusammenfügbar, dass der Verriegelungsvorsprung des ersten Modulkörpers an oder in einer gemeinsamen Ebene und der Verriegelungsvorsprung des zweiten Modulkörpers an oder in der Ebene angeordnet ist. Die Ebene ist orthogonal zur Höhenrichtung ausgerichtet.

Das Funktionsmodul weist zumindest einen ersten Modulkörper und einen zweiten Modulkörper auf. Das Funktionsmodul ist vorteilhaft zumindest zweiteilig ausgebildet. Das Funktionsmodul, insbesondere aus zusammengefügtem ersten und zweiten Modulkörper, erstreckt sich in einer Höhenrichtung. Die Höhenrichtung ist vorzugsweise auch die Richtung, in der das Funktionsmodul an dem Zubereitungsgefäß angeordnet werden kann. Ist das Funktionsmodul beispielsweise im Wesentlichen rund ausgebildet, erstreckt sich die Höhenrichtung vorzugsweise orthogonal zu einer gedachten Ebene, die den runden Querschnitt beinhaltet. Vorzugsweise erstreckt sich die Höhenrichtung im montierten Zustand des Funktionsmoduls an einem Zubereitungsgefäß parallel, insbesondere koaxial, mit der Längsachse des Zubereitungsgefäßes bzw. der Rotationsachse des Küchengeräts.

Der erste Modulkörper weist mindestens einen Verriegelungsvorsprung auf und der zweite Modulkörper weist ebenfalls mindestens einen Verriegelungsvorsprung auf. Die Verriegelungsvorsprünge können beispielsweise auch als Nocken bezeichnet werden. Der erste Modulkörper und der zweite Modulkörper sind derart ausgebildet und die Verriegelungsvorsprünge derart an dem jeweiligen Modulkörper angeordnet, dass wenn der erste Modulkörper und der zweite Modulkörper zum Funktionsmodul zusammengefügt sind, der Verriegelungsvorsprung des ersten Modulkörpers und der Verriegelungsvorsprung des zweiten Modulkörpers an oder in einer gemeinsamen gedachten Ebene E angeordnet sind. Die Ebene E ist orthogonal zur Höhenrichtung ausgerichtet. Der erste Modulkörper und der zweite Modulkörper werden beispielsweise dadurch zusammengefügt, dass sie aneinander anliegen. Insbesondere sind der erste Modulkörper und der zweite Modulkörper kraft-, form- und/oder kraftformschlüssig miteinander verbindbar.

Dass ein Verriegelungsvorsprung an der gedachten Ebene angeordnet ist, bedeutet, dass der Verriegelungsvorsprung mit mindestens einer seiner Flächen an der Ebene, insbesondere tangential, anliegt. Insbesondere wird der Verriegelungsvorsprung dabei von der Ebene nicht geschnitten. Wenn ein Verriegelungsvorsprung beispielsweise - in Höhenrichtung betrachtet - eine Oberseite und eine Unterseite aufweist, ist beispielsweise vorgesehen, dass der Verriegelungsvorsprung derart am ersten Modulkörper oder am zweiten Modulkörper angeordnet ist, dass die Oberseite oder die Unterseite, insbesondere tangential, an der Ebene anliegt.

Alternativ oder zusätzlich dazu ist vorgesehen, dass mindestens einer der Verriegelungsvorsprünge in der Ebene angeordnet ist. Das bedeutet, dass die Ebene einen Verriegelungsvorsprung an einer beliebigen Stelle schneidet. Vorzugsweise sind die Verriegelungsvorsprünge derart angeordnet, dass sie identisch von der Ebene geschnitten werden, beispielsweise jeweils auf der Hälfte ihrer, vorzugsweise identischen, Höhe.

Beispielsweise ist auch vorgesehen, dass einer der Verriegelungsvorsprünge an der Ebene angeordnet ist, und dass gleichzeitig einer der Verriegelungsvorsprünge in der Ebene angeordnet ist. Dadurch kann beispielsweise die Verwendung von bestimmten Funktionsmodulen mit bestimmten Zubereitungsgefäßen codiert werden.

Bevorzugt ist die Ebene derart ausgerichtet, dass sie im Wesentlichen parallel oder tangential zu einer Oberseite und/oder einer Unterseite eines Verriegelungsvorsprungs ausgerichtet ist. Besonders bevorzugt ist vorgesehen, dass alle Verriegelungsvorsprünge identisch angeordnet sind, also beispielsweise von unten an der Ebene, von oben an der Ebene oder mit identischer Höhe in der Ebene angeordnet sind.

Bei Versuchen hat es sich als vorteilhaft herausgestellt, wenn die Verriegelungsvorsprünge mit einer Toleranz von maximal ± 0,5 mm, insbesondere von maximal ± 0,25 mm, von unten an der Ebene, von oben an der Ebene oder in der Ebene angeordnet sind. Besonders bevorzugt ist, wenn die Verriegelungsvorsprünge mit einer maximalen Toleranz von unten an der Ebene, von oben an der Ebene oder in der Ebene angeordnet sind, die maximal 1/10 der Höhe eines Verriegelungsvorsprungs in Höhenrichtung entspricht.

Der erste Modulkörper und der zweite Modulkörper sind in Bezug auf ihre Form insbesondere so ausgebildet, dass sie im zusammengefügten Zustand gemeinsam an einem Zubereitungsgefäß angeordnet werden können, und dass die Verriegelungsvorsprünge an oder in einer gemeinsamen Ebene liegen. Dadurch wird sichergestellt, dass sowohl der mindestens eine Verriegelungsvorsprung des ersten Modulkörpers als auch der mindestens eine Verriegelungsvorsprung des zweiten Modulkörpers zum Zwecke des Verriegelns, beispielsweise mit einer Funktionsmodulverriegelungseinheit bzw. einem Funktionsmodulverriegelungselements eines Zubereitungsgefäßes, zusammenwirken können.

Die Funktionsmodulverriegelungseinheit bzw. das Funktionsmodulverriegelungselement an einem Zubereitungsgefäß wird beispielsweise auch als Deckelverriegelungseinheit bzw. Deckelverriegelungselement bezeichnet. Wie nachfolgend ausgeführt, sind sowohl ein Deckel als auch ein Funktionsmodul an einem Zubereitungsgefäß anordenbar und mit der gleichen Funktionalität mit dem Zubereitungsgefäß verriegelbar. Insoweit wird insbesondere auf die nachfolgende Beschreibung verwiesen.

Das Funktionsmodul ist beispielsweise zumindest teilweise auf einen Deckel und/oder das Zubereitungsgefäß aufsetzbar und/oder teilweise oder vollständig in das Zubereitungsgefäß, insbesondere in einen Zubereitungsraum, einbringbar. Das Funktionsmodul ist z. B. als Aufsatzzubehör oder als Einsatzzubehör ausgebildet. Besonders bevorzugt ist vorgesehen, dass der Deckel als Funktionsmodul ausgebildet ist. Das ist gleichbedeutend damit, dass das Funktionsmodul eine Deckelschnittstelle aufweist.

Ferner vorteilhaft ist vorgesehen, dass das Funktionsmodul mindestens eine Verbindungsschnittstelle zum Zusammenwirken mit einem Werkzeug und/oder einem Werkzeughalter des Zubereitungsgefäßes aufweist, um z. B. eine Rotation des Werkzeugs des Zubereitungsgefäßes zu nutzen. Das ist insbesondere bei einem Funktionsmodul sinnvoll, das ein eigenes Werkzeug, auch Zubehörwerkzeug genannt, aufweist, z. B. ein Entsaftermodul, ein Schneidmodul, ein Schälmodul, eine Nudelpresse, eine Spätzlepresse oder ein Fleischwolf.

Besonders bevorzugt weist das Funktionsmodul mindestens eine Deckelschnittstelle auf, um mit einer Funktionsmodulverriegelungseinheit bzw. einem Funktionsmodulverriegelungselement des Zubereitungsgefäßes zusammenzuwirken, und das Funktionsmodul - wie einen Deckel - mit dem Zubehörgefäß zu verriegeln und zu entriegeln. Die Verriegelungsvorsprünge des ersten Modulkörpers und des zweiten Modulkörpers sind vorzugsweise im Bereich der Deckelschnittstelle angeordnet. Durch das Funktionsmodul, insbesondere den ersten und/oder den zweiten Modulkörper, kann eine Abdeckwirkung erreicht werden. Die Abdeckwirkung kann einzeln oder gemeinsam durch die Modulkörper erzeugt werden. Die Abdeckwirkung dient dazu, dass Gargut beim Betrieb nicht unkontrolliert aus dem Zubereitungsgefäß herausfliegen kann. Zusätzlich dient die Abdeckwirkung dazu, dass ein Nutzer nicht in den näheren, insbesondere inneren, Wirkungsbereich des Zubereitungsgefäßes oder eines der Modulkörper gelangen kann.

Das Funktionsmodul wird bei einer Verwendung durch das Zusammenwirken zuverlässig auf dem Zubereitungsgefäß oder in dem Zubereitungsgefäß gehalten. Das Funktionsmodul stellt in diesem Sinne insbesondere einen speziellen Deckel dar. Die Deckelschnittstelle weist vorzugsweise einen Teil oder alle Merkmale der beschriebenen Merkmale eines Deckels auf, die dieser für das Zusammenwirken mit der Funktionsmodulverriegelungseinheit bzw. Deckelverriegelungseinheit, insbesondere dem Funktionsmodulverriegelungselement, benötigt, insbesondere beispielsweise mindestens einen oder eine Mehrzahl von Verriegelungsvorsprüngen und/oder Zentrierelemente und/oder eine Abstützeinheit.

Das Funktionsmodul ist beispielsweise ein Reinigungsmodul, ein Rührmodul, ein Entsaftermodul, ein Dampfgarmodul, ein Warmhaltemodul, ein Schälmodul, ein Schneidmodul, ein Nudelmodul, ein Spätzlemodul oder ein Reibmodul. Jedes der vorgenannten Funktionsmodule ist beispielsweise als Einsatz oder als Aufsatz ausgebildet, z. B. ein Reinigungseinsatz oder ein Reinigungsaufsatz.

Der Deckel oder das Funktionsmodul rotiert bei einer Ver- und Entriegelung mit dem Zubereitungsgefäß insbesondere nicht. Bei einer Ver- oder Entriegelung erfolgt vorzugsweise lediglich eine translatorische Bewegung parallel zur Rotationsachse bzw. parallel zur Höhenrichtung. Vorzugsweise wird eine Drehung des Deckels bzw. des Funktionsmoduls durch ein, insbesondere formschlüssiges, Zusammenwirken eines Abstützelements am Zubereitungsgefäß und eines Abstützgegenelements am Deckel oder am Funktionsmodul verhindert.

Die Erfindung weist gegenüber dem Stand der Technik den Vorteil auf, dass durch die Anordnung von jeweils einem Verriegelungsvorsprung an jeweils einem Modulkörper des Funktionsmoduls ein betriebssicheres Verriegeln gewährleistet werden kann. Zudem kann mit einer Abfrage des Vorhandenseins des Verriegelungsvorsprungs durch das Küchengerät ein Vorhandensein mindestens eines, vorzugsweise beider, Modulkörper vor Inbetriebnahme abgefragt werden.

Um vorteilhaft ein Zusammenwirken mit einem im Wesentlichen rund ausgebildeten Zubereitungsgefäß zu verbessern, ist gemäß einer ersten Ausgestaltung des Funktionsmoduls vorgesehen, dass die Verriegelungsvorsprünge derart am ersten Modulkörper und am zweiten Modulkörper angeordnet sind, dass der Verriegelungsvorsprung des ersten Modulkörpers und der Verriegelungsvorsprung des zweiten Modulkörpers im zusammengefügten Zustand in oder an einem gemeinsamen Durchmesser angeordnet sind. Die Verriegelungsvorsprünge liegen mit mindestens einer Fläche von innen oder von außen, insbesondere tangential, an dem Durchmesser an. Es ist auch vorgesehen, dass mindestens ein Verriegelungsvorsprung derart angeordnet ist, dass dieser in dem Durchmesser liegt, also von dem Durchmesser geschnitten wird. Eine diesbezügliche Variation kann beispielsweise als Codierung verwendet werden, um eine bevorzugte Ausrichtung zwischen dem Funktionsmodul und dem Zubereitungsgefäß festzulegen.

Eine Fläche eines Verriegelungsvorsprungs, die beispielsweise an dem Durchmesser anliegt, insbesondere tangential anliegt, ist beispielsweise eine zur Höhenrichtung weisende Stirnfläche oder eine von der Höhenrichtung wegweisende Stirnfläche, die beispielsweise in den Modulkörper übergeht. Vorzugsweise sind alle Verriegelungsvorsprünge beider Modulkörper identisch angeordnet, also derart, dass sie von außen an dem Durchmesser anliegen, von innen an dem Durchmesser anliegen oder in gleicher Weise von dem Durchmesser geschnitten werden. Vorzugsweise liegen die in Höhenrichtung weisenden Stirnflächen der Verriegelungsvorsprünge im zusammengefügten Zustand an dem Durchmesser an. Der Durchmesser beträgt beispielsweise zwischen 186 mm und 192 mm, insbesondere mindestens 186 mm. Beispielsweise beträgt der Außendurchmesser des Funktionsmodulverriegelungselements zwischen 194 mm und 198 mm.

Eine weitere Ausgestaltung des Funktionsmoduls sieht vor, dass der Verriegelungsvorsprung am ersten Modulkörper und der Verriegelungsvorsprung am zweiten Modulkörper derart angeordnet sind, dass mindestens ein Verriegelungsvorsprung des ersten Modulkörpers und mindestens ein Verriegelungsvorsprung des zweiten Modulkörpers im zusammengefügten Zustand auf einem inneren Umfang des Funktionsmoduls gegenüberliegend zueinander angeordnet sind. Wenn beispielsweise, wie vorbeschrieben, der Verriegelungsvorsprung des ersten Modulkörpers und der Verriegelungsvorsprung des zweiten Modulkörpers auf einem gemeinsamen Durchmesser angeordnet sind, dann sind diese gegenüberliegend zueinander auf dem gemeinsamen Durchmesser angeordnet.

Beispielsweise ist vorgesehen, dass der erste Modulkörper und/oder der zweite Modulkörper mindestens einen Kragen aufweisen. Vorzugsweise erstreckt sich der Kragen im montierten Zustand parallel zur Höhenrichtung. Bevorzugt ist vorgesehen, dass an dem Kragen eines Modulkörpers mindestens ein radial nach innen vorstehender Verriegelungsvorsprung vorgesehen ist. Dadurch wird gewährleistet, dass die Verriegelungsvorsprünge im zusammengefügten Zustand in einer Ebene bzw. auf einem Durchmesser angeordnet sind. Beispielsweise ist vorgesehen, dass die Verriegelungsvorsprünge, die auch als Nocken bezeichnet werden können, mindestens eine, insbesondere zu der Ebene, geneigte Nockenfläche aufweisen, die zur Führung beim Zusammenwirken mit einem Zubereitungsgefäß verwendet werden kann.

Eine weitere Ausgestaltung des Funktionsmoduls sieht vor, dass jeder Modulkörper mindestens oder genau einen Verriegelungsvorsprung, mindestens oder genau zwei, mindestens oder genau drei, mindestens oder genau vier oder mindestens oder genau fünf Verriegelungsvorsprünge aufweist. Die Anzahl der Verriegelungsvorsprünge an den Modulkörpern kann gleich oder unterschiedlich sein. Es ist insbesondere vorgesehen, dass der erste Modulkörper drei Verriegelungsvorsprünge und der zweite Modulkörper einen Verriegelungsvorsprung aufweist, wobei der Verriegelungsvorsprung des zweiten Modulkörpers im zusammengefügten Zustand auf einem Durchmesser gegenüberliegend zu mindestens einem Verriegelungsvorsprung des ersten Modulkörpers angeordnet ist.

Besonders bevorzugt ist vorgesehen, dass der erste Modulkörper mindestens zwei erste Verriegelungsvorsprünge und der zweite Modulkörper mindestens oder genau einen zweiten Verriegelungsvorsprung aufweist. Weiter bevorzugt ist vorgesehen, dass die ersten Verriegelungsvorsprünge breiter ausgebildet sind als der zweite Verriegelungsvorsprung. Insbesondere ist vorgesehen, dass der erste Modulkörper zusätzlich mindestens oder genau einen dritten Verriegelungsvorsprung aufweist und dass der dritte Verriegelungsvorsprung schmaler als der zweite Verriegelungsvorsprung ausgebildet ist.

Alternativ dazu ist vorgesehen, dass der zweite Verriegelungsvorsprung und der dritte Verriegelungsvorsprung eine gleiche Breite aufweisen. Unter "Breite" wird hier insbesondere die Erstreckung in einer Umfangsrichtung in der gemeinsamen Ebene verstanden.

Insbesondere sind der erste Modulkörper und der zweite Modulkörper derart ausgebildet, dass alle Verriegelungsvorsprünge in oder an der gemeinsamen Ebene und/oder in oder an einem gemeinsamen Durchmesser angeordnet sind, wenn der erste Modulkörper und der zweite Modulkörper zusammengefügt sind.

Eine Weiterbildung der Erfindung sieht beispielsweise auch vor, dass das Funktionsmodul mehr als zwei Modulkörper aufweist, und dass an jedem Modulkörper mindestens ein Verriegelungsvorsprung ausgebildet ist. Die Modulkörper sind dann insbesondere derart zusammenfügbar, dass alle Verriegelungsvorsprünge erfindungsgemäß in oder an einer gemeinsamen, gedachten Ebene angeordnet sind. Beispielsweise weist das Funktionsmodul einen dritten und/oder einen vierten Modulkörper auf. Es ist vorteilhaft auch vorgesehen, dass das Funktionsmodul weitere Elemente aufweist, die mit einem oder mehreren Modulkörpern zusammengefügt werden können, die aber selbst keinen Verriegelungsvorsprung aufweisen.

Als besonders vorteilhaft hat sich gemäß einer weiteren Ausgestaltung des Funktionsmoduls herausgestellt, wenn vorgesehen ist, dass zumindest der erste Modulkörper und der zweite Modulkörper formschlüssig zusammenfügbar sind. Der erste Modulkörper und der zweite Modulkörper sind folglich derart ausgebildet, dass sie zueinander korrespondierende Geometrien aufweisen, so dass sie vorzugsweise in genau einer Ausrichtung oder in genau zwei Ausrichtungen zueinander zusammenfügbar sind. Beispielsweise ist vorgesehen, dass der erste Modulkörper und der zweite Modulkörper ineinander steckbar sind. Ferner ist z. B. vorgesehen, dass einer der beiden Modulkörper kreissegmentartig ausgebildet ist und in eine komplementäre Ausnehmung in dem weiteren Modulkörper einsetzbar ist. Bei mehr als zwei Modulkörpern weisen alle Modulkörper eine Form auf, die das Zusammenfügen aller Modulkörper, insbesondere in genau einer Ausrichtung zueinander, ermöglicht.

Besonders bevorzugt ist vorgesehen, dass der erste Modulkörper und der zweite Modulkörper ineinandergreifen oder sich gegenseitig zumindest teilweise übergreifen. Des Weiteren ist z. B. vorgesehen, dass der erste Modulkörper den zweiten Modulkörper im zusammengefügten Zustand zumindest teilweise überdeckt. Beispielsweise ist der erste Modulkörper deckelartig ausgebildet, so dass er den zweiten Modulkörper zumindest teilweise überdeckt und/oder einen Aufnahmeraum des zweiten Modulkörpers abdeckt. Vorzugsweise ist auch vorgesehen, dass mindestens einer der beiden Modulkörper eine Ausnehmung aufweist, die von zumindest einem Teil des weiteren Modulkörpers durchgriffen wird. Durch das Durchgreifen wird im Betrieb vorzugsweise ein Verdrehen des ersten Modulkörpers relativ zum zweiten Modulkörper verhindert.

Bevorzugt ist vorgesehen, dass der erste Modulkörper und der zweite Modulkörper in Höhenrichtung übereinander anordenbar bzw. angeordnet sind. Vorzugsweise ist ein Modulkörper im zusammengefügten Zustand unterhalb der Ebene und ein Modulkörper oberhalb der Ebene angeordnet. Die Verriegelungsvorsprünge sind gleichwohl bevorzugt in gleicher Weise in oder an der Ebene angeordnet, wobei die einen Verriegelungsvorsprünge von unten an ihre Position zur Ebene geführt werden, die anderen von oben.

Beispielsweise ist mindestens einer der Modulkörper, vorzugsweise der zweite Modulkörper, topfartig ausgebildet, so dass der zweite Modulkörper zumindest teilweise in das Zubereitungsgefäß einsetzbar ist. Beispielsweise ist der zweite Modulkörper zur Aufnahme von Flüssigkeit ausgebildet oder alternativ dazu siebartig ausgebildet. Bei dieser Ausgestaltung hat es sich als vorteilhaft herausgestellt, wenn der erste Modulkörper deckelartig ausgebildet ist, so dass er den zweiten Modulkörper und beispielsweise auch eine Öffnung des Zubereitungsgefäßes zumindest teilweise überdecken kann.

Eine Weiterbildung sieht vor, dass mindestens ein Modulkörper, insbesondere der erste Modulkörper und/oder der zweite Modulkörper, im Wesentlichen ringartig ausgebildet ist. Vorzugsweise ist der weitere Modulkörper mit dem ringartigen Modulkörper zusammenfügbar. Insbesondere weist der ringartige Modulkörper mindestens oder genau einen Verriegelungsvorsprung oder mindestens oder genau zwei, mindestens oder genau drei Verriegelungsvorsprünge auf.

Um beispielsweise die Verfügbarkeit von Funktionen eines Küchengerätes steuern zu können, ist gemäß einer weiteren Ausgestaltung des Funktionsmoduls vorgesehen, dass der erste Modulkörper und/oder der zweite Modulkörper mindestens ein Identifikationsmittel aufweist/aufweisen. Vorzugsweise ist vorgesehen, dass das Identifikationsmittel von einem Erkennungsmittel des Zubereitungsgefäßes oder des Küchengeräts elektronisch auswertbar ist, insbesondere unter Verwendung einer Steuereinrichtung auswertbar ist. Das Identifikationsmittel wirkt beispielsweise mit dem Küchengerät derart zusammen, dass das Küchengerät anhand der Art und/oder Anordnung des Identifikationsmittels die Art und/oder Position und/oder Ausrichtung des Funktionsmoduls, insbesondere in Bezug auf das Zubereitungsgefäß, erkennen kann, um beispielsweise einen Funktionsumfang, z. B. eine Werkzeugdrehzahl, eine Werkzeugdrehrichtung oder eine Heiztemperatur des Küchengerätes einzuschränken oder zu erweitern. Beispielsweise ist vorgesehen, dass der erste Modulkörper und/oder der zweite Modulkörper mindestens oder genau einen oder mindestens oder genau zwei Magneten als Identifikationsmittel aufweisen. Alternativ oder zusätzlich dazu ist vorgesehen, dass der erste Modulkörper und/oder der zweite Modulkörper mindestens einen RFID-Chip aufweisen. Insbesondere ist vorgesehen, dass das Küchengerät, vorzugsweise das Zubereitungsgefäß, mindestens einen 3D-Hallsensor aufweist, mit dem an dem mindestens einen Modulkörper angeordnete Magnete in Bezug auf ihre Magnetisierung, Ausrichtung und/oder Position erfassbar sind.

In einer weiteren Ausgestaltung des Funktionsmoduls ist vorgesehen, dass mindestens ein Werkzeug, auch Zubehörwerkzeug genannt, und/oder mindestens eine Getriebeeinheit vorhanden ist. Das Werkzeug und/oder die Getriebeeinheit sind in oder an dem Funktionsmodul angeordnet. Beispielsweise ist das Werkzeug und/oder die Getriebeeinheit Teil des ersten Modulkörpers oder des zweiten Modulkörpers. Beispielsweise ist das Werkzeug als Reib- und/oder Schneidscheibe ausgebildet.

Über das Werkzeug des Zubereitungsgefäßes kann mit Hilfe einer Verbindungsschnittstelle, auch Adapterelement genannt, ein Zubehörwerkzeug oder Element in dem Funktionsmodul angetrieben werden, insbesondere um den Funktionsumfang zu erweitern. Dieses angetriebene Zubehörwerkzeug oder Element kann stehen oder rotieren um die Funktion zu erweitern. Alternativ dazu ist vorgesehen, dass mittels eines Adapterelements eine Kraftübertragung durch das Funktionsmodul, insbesondere zumindest durch den ersten und/oder den zweiten Modulkörper, erfolgt. Die Bewegung des Werkzeugs des Zubereitungsgefäßes wird dabei, insbesondere mit oder ohne eine Getriebeeinheit, vorzugsweise an eine Oberseite des Funktionsmoduls oder des jeweiligen Modulkörpers übertragen. Es ist vorzugsweise vorgesehen, dass eine Bewegung des Werkzeugs des Zubereitungsgefäßes unmittelbar in das Funktionsmodul übertragen wird, in dem Funktionsmodul verwendbar ist, oder durch das Funktionsmodul durchgeleitet wird.

Die Getriebeeinheit weist mindestens zwei Zahnräder auf, die derart ausgebildet sind, dass eine hohe Drehzahl an einer Eingangsschnittstelle auf eine niedrige Drehzahl an einer Ausgangsschnittstelle übersetzbar ist, beispielsweise um ein Reib- und/oder Schneidwerkzeug zu betreiben. Vorzugsweise sind der erste Modulkörper und der zweite Modulkörper derart ausgebildet, dass die Getriebeeinheit und/oder das Werkzeug im zusammengefügten Zustand zwischen dem ersten Modulkörper und dem zweiten Modulkörper anordenbar sind. Der erste Modulkörper und der zweite Modulkörper bilden folglich eine Art Gehäuse für das Werkzeug und/oder die Getriebeeinheit.

Vorzugsweise weist das Funktionsmodul mindestens eine Werkzeugeinheit auf. Die Werkzeugeinheit weist in einem Gehäuse mindestens ein Werkzeug, auch Zubehörwerkzeug genannt, und mindestens ein Getriebe auf. Das Werkzeug ist beispielsweise ein Reib- und/oder Schneidwerkzeug. Beispielsweise ist mindestens ein Zahnrad des Getriebes einteilig mit dem Werkzeug ausgebildet, so dass das Werkzeug selbst ein Teil des Getriebes ist. Beispielsweise ist das Werkzeug aus Metall von einem Zahnring aus Kunststoff umgeben. Mit dem Austausch des Werkzeugs wird damit auch ein Teil des Getriebes austauschbar, so dass ggf. auch die Übersetzung für jedes Werkzeug durch den umgebenden Zahnring festgelegt wird. Insbesondere ist die Werkzeugeinheit zwischen dem ersten Modulkörper und dem zweiten Modulkörper anordenbar. Bevorzugt ist das Gehäuse der Werkzeugeinheit derart ausgebildet, dass es formschlüssig mit mindestens einem der Modulkörper zusammenwirkt, um ein relatives Verdrehen zu verhindern. Die Werkzeugeinheit ist beispielsweise unter Verwendung einer Verbindungsschnittstelle mit dem Werkzeug des Zubereitungsgefäßes antreibbar.

Besonders bevorzugt ist vorgesehen, dass das Funktionsmodul mindestens eine Verbindungsschnittstelle zum Werkzeug oder Werkzeughalter eines Zubereitungsgefäßes aufweist. Vorzugsweise umfasst das Funktionsmodul mindestens einen Antriebsadapter, der formschlüssig mit einem Werkzeug oder einem Werkzeughalter des Zubereitungsgefäßes zusammenwirken kann, um ein Drehmoment zu übertragen.

Um vorteilhaft zu verhindern, dass das Funktionsmodul, insbesondere bei der Verwendung eines Werkzeugs oder einer Werkzeugeinheit, relativ zum Zubereitungsgefäß rotiert, ist gemäß einer weiteren Ausgestaltung vorgesehen, dass das Funktionsmodul mindestens ein Abstützgegenelement zum formschlüssigen Zusammenwirken mit dem Zubereitungsgefäß aufweist. Das Abstützgegenelement ist vorzugsweise zumindest teilweise oder vollständig am ersten Modulkörper und/oder zumindest teilweise oder vollständig am zweiten Modulkörper ausgebildet. Das Abstützgegenelement wirkt formschlüssig beispielsweise mit einem Abstützelement des Zubereitungsgefäßes zusammen, um eine Rotation zu verhindern.

Beispielsweise sind in einer Außenkontur des zweiten Modulkörpers mindestens oder genau eine Ausnehmung, mindestens oder genau zwei oder mindestens oder genau drei Ausnehmungen vorgesehen, um mit am Zubereitungsgefäß ausgebildeten Vorsprüngen formschlüssig zusammenzuwirken, um dadurch eine Rotation des Funktionsmoduls um die Mittelachse des Zubereitungsgefäßes zu verhindern. Vorzugsweise weisen die Ausnehmungen am zweiten Modulkörper eine Form auf, die ein Zentrieren beim Zusammenwirken mit den Vorsprüngen am Zubereitungsgefäß bewirkt. Beispielsweise weisen die Ausnehmungen eine in Höhenrichtung abnehmende Breite auf, so dass der zweite Modulkörper beim Einsetzen in das Zubereitungsgefäß ausgerichtet wird, je tiefer er eingebracht wird. Vorzugsweise wirken das Abstützelement und das Abstützgegenelement zusammen, wenn der zweite Modulkörper in das Zubereitungsgefäß eingesetzt ist.

Alternativ oder zusätzlich dazu weist das Zubereitungsgefäß beispielsweise an einem oberen Rand ein nach außen vorstehendes Abstützelement auf, das formschlüssig mit dem Abstützgegenelement zusammenwirken kann, wenn das Funktionsmodul am Zubereitungsgefäß angeordnet ist. Insbesondere ist vorgesehen, dass der erste Modulkörper und der zweite Modulkörper im zusammengefügten Zustand formschlüssig derart zusammenwirken, dass eine Rotation des ersten Modulkörpers relativ zum zweiten Modulkörper, insbesondere um die Höhenrichtung, verhindert wird. Beispielsweise durchgreift dazu der erste Modulkörper den zweiten Modulkörper zumindest teilweise, vorzugsweise parallel zur Höhenrichtung.

Die eingangs genannte Aufgabe ist ferner gelöst durch ein Zubereitungsmodul zum Anordnen in einem Aufnahmebereich einer Küchengerätebasis eines Küchengerätes. Das Zubereitungsmodul weist mindestens ein Zubereitungsgefäß und mindestens ein Funktionsmodul nach einem der beschriebenen Ausführungsbeispiele auf. Das Zubereitungsmodul weist ferner mindestens ein Funktionsmodulverriegelungselement auf. Das Zubereitungsgefäß weist einen Zubereitungsraum zur Aufnahme zumindest einer Zutat einer Speise auf. Das Funktionsmodulverriegelungselement ist um eine Rotationsachse R zumindest zwischen einer Funktionsmodulfreigabeposition und einer Funktionsmodulverriegelungsposition rotierbar. Das Funktionsmodulverriegelungselement kann auch als Deckelverriegelungselement bezeichnet werden, das zwischen einer Deckelfreigabeposition und einer Deckelverriegelungsposition rotierbar ist.

Das Zubereitungsgefäß des Zubereitungsmoduls ist zum Anordnen in einem Aufnahmebereich einer Küchengerätebasis eines Küchengerätes ausgebildet und eingerichtet. Das Zubereitungsmodul dient - bei Verwendung mit einer Küchengerätebasis - dem automatischen, teilautomatischen oder manuellen Zubereiten, z. B. Zerkleinern, Mahlen, Pressen, Rühren, Garen, Dampfgaren und/oder Warmhalten, insbesondere von Speisen. Das Zubereitungsgefäß weist insbesondere mindestens ein elektrisches Heizmittel zum Erwärmen des Zubereitungsraums auf. Ferner weist das Zubereitungsgefäß mindestens eine elektrische Schnittstelle, beispielsweise für die Kontaktierung des Heizmittels und/oder zur Kontaktierung von Sensoren, auf. Die elektrische Schnittstelle ist insbesondere zum Zusammenwirken mit einer elektrischen Gegenschnittstelle der Küchengerätebasis ausgebildet.

Ferner weist das Zubereitungsgefäß vorzugsweise mindestens eine mechanische Schnittstelle, beispielsweise für die Übertragung eines Drehmoments, für ein Werkzeug auf, die zum Zusammenwirken mit einer mechanischen Gegenschnittstelle der Küchengerätebasis, insbesondere einer Werkzeugschnittstelle, ausgebildet ist. Das Zubereitungsgefäß weist vorzugsweise mindestens ein rotierbares Werkzeug auf, das fest mit dem Zubereitungsgefäß verbunden ist oder lösbar in dem Zubereitungsgefäß, insbesondere an einem Werkzeughalter, gehalten ist. Insbesondere ist das Werkzeug mit der mechanischen Schnittstelle gekoppelt. Das Werkzeug wird mittelbar oder unmittelbar von einem Motor des Küchengeräts angetrieben.

Der Zubereitungsraum des Zubereitungsgefäßes ist insbesondere mit einem Funktionsmodul oder einem Deckel verschließbar, wobei das Funktionsmodul unter Verwendung eines Funktionsmodulverriegelungselements verriegelbar ist. Das Funktionsmodulverriegelungselement ist vorteilhaft zwischen einer Funktionsmodulfreigabeposition, in der das Funktionsmodul abnehmbar ist, und einer Funktionsmodulverriegelungsposition, in der das Funktionsmodul mit dem Zubereitungsgefäß verriegelt ist, bewegbar, insbesondere rotierbar. Das Zubereitungsgefäß weist vorzugsweise mindestens einen Handgriff zum Transport sowie zur einfacheren Handhabung auf. Der Handgriff ist insbesondere im Wesentlichen senkrecht orientiert und ist auf einer Außenseite des Gehäuses des Zubereitungsmoduls angeordnet.

Erfindungsgemäß weist das Funktionsmodul mindestens einen ersten Modulkörper und mindestens einen zweiten Modulkörper auf, wobei jeder der Modulkörper mindestens einen Verriegelungsvorsprung aufweist. Der erste Modulkörper und der zweite Modulkörper sind derart an dem Zubereitungsgefäß anordenbar, dass beide Vorsprünge mit dem Funktionsmodulverriegelungselement des Zubereitungsgefäßes zusammenwirken können. In der Funktionsmodulverriegelungsposition wirkt das Funktionsmodulverriegelungselement vorzugsweise derart formschlüssig mit beiden Verriegelungsvorsprüngen zusammen, dass das Funktionsmodul mit dem Zubereitungsgefäß verbunden ist. Vorzugsweise sind der erste Modulkörper und der zweite Modulkörper unabhängig voneinander am Zubereitungsmodul anordenbar. Insbesondere ist vorgesehen, dass der erste Modulkörper und der zweite Modulkörper während des Anordnens am Zubereitungsmodul auch zueinander positioniert bzw. zusammengefügt werden.

Das Funktionsmodulverriegelungselement rotiert vorzugsweise parallel zu der oder in der Ebene, in der die Verriegelungsvorsprünge wie vorbeschrieben im zusammengefügten Zustand angeordnet sind. In Abhängigkeit davon, ob die Verriegelungsvorsprünge jeweils an oder in der Ebene angeordnet sind, kann eine Codierung verwirklicht werden, um das Anordnen des Funktionsmoduls an einem Zubereitungsgefäß nur in mindestens oder genau einer Ausrichtung, mindestens oder genau zwei Ausrichtungen oder mindestens oder genau drei Ausrichtungen zuzulassen. Das Funktionsmodul des Zubereitungsmoduls ist insbesondere gemäß einem der beschriebenen Ausführungsbeispiele des Funktionsmoduls ausgebildet. Die Verriegelung des Funktionsmoduls mit den Verriegelungsvorsprüngen erfolgt funktional genauso, wie nachfolgend für einen Deckel beschrieben wird.

In der Funktionsmodulverriegelungsposition liegen die Verriegelungsvorsprünge derart an dem Funktionsmodulverriegelungselement bzw. dem Deckelverriegelungselement an, dass das Funktionsmodul nicht von dem Zubereitungsgefäß entnommen werden kann. Beispielsweise beträgt eine Überdeckung eines Verriegelungsvorsprungs und des Funktionsmodulverriegelungselements zwischen 2 mm und 4,5 mm.

Das Funktionsmodulverriegelungselement weist vorzugsweise mindestens eine Verriegelungskulisse auf, während die Verriegelungsvorsprünge in Richtung der Mittelachse des Zubereitungsgefäßes vorstehen. Vorzugsweise weist das Funktionsmodulverriegelungselement eine der Anzahl an Verriegelungsvorsprüngen entsprechende Anzahl an Verriegelungskulissen auf. Ein Verriegelungsvorsprung und eine Verriegelungskulisse wirken bei einer Bewegung des Funktionsmoduls in Richtung der Funktionsmodulverriegelungsposition derart formschlüssig zusammen, dass das Funktionsmodul fest mit dem Zubereitungsgefäß verbunden ist, wenn sich das Funktionsmodulverriegelungselement in der Funktionsmodulverriegelungsposition befindet.

Die Verriegelungskulisse stellt eine Kontur dar, in der ein Verriegelungsvorsprung bei einer Bewegung des Funktionsmodulverriegelungselements geführt wird, um das Funktionsmodul zu verriegeln bzw. zu entriegeln, wenn sie relativ zu den Verriegelungsvorsprüngen bewegt, insbesondere rotiert, wird. Beispielsweise weist die Verriegelungskulisse eine Anlaufschräge auf, die im Zusammenwirken mit einem Verriegelungsvorsprung ein Heranziehen des Funktionsmoduls an das Zubereitungsgefäß bewirkt, indem der Verriegelungsvorsprung an den Anlaufschrägen abgleitet.

Die Anlaufschräge ist vorzugsweise derart ausgebildet, dass sie bei einer Rotation des Funktionsmodulverriegelungselementes zumindest eine axiale Verschiebung des Verriegelungsvorsprungs in eine Richtung parallel zu einer Längsachse des Zubereitungsgefäßes bewirkt. Dadurch wird das Funktionsmodul um die Strecke entlang der Längsachse näher an das Zubereitungsgefäß herangebracht, um die auch der Verriegelungsvorsprung von der Anlaufschräge bewegt wird. Zu weiteren Details der Verriegelung wird auf die Figurenbeschreibung verwiesen.

Die eingangs genannte Aufgabe ist ferner gelöst durch ein Küchengerät mit mindestens einer Küchengerätebasis und mindestens einem Zubereitungsmodul nach einem der beschriebenen Ausführungsbeispiele. Die Küchengerätebasis weist mindestens einen Aufnahmebereich für das Zubereitungsgefäß auf. Ferner weist die Küchengerätebasis mindestens eine Steuereinheit auf, die dazu ausgebildet und eingerichtet ist, unter Verwendung des Funktionsmodulverriegelungselementes zu erkennen, ob der erste Modulkörper und/oder der zweite Modulkörper vorhanden sind/ist. Zum Erkennen des Vorhandenseins des ersten Modulkörpers und/oder des zweiten Modulkörpers bewegt die Steuereinheit beispielsweise das Funktionsmodulverriegelungselement zumindest teilweise oder über eine Teilstrecke zwischen der Funktionsmodulverriegelungsposition und der Funktionsmodulfreigabeposition, um durch einen Anschlag beispielsweise an dem ersten Modulkörper oder an dem zweiten Modulkörper zu erkennen, dass diese vorhanden sind bzw. nicht vorhanden sind. Das Nichtvorhandensein wird beispielsweise dadurch erkannt, dass das Funktionsmodulverriegelungselement über eine Position hinaus verfahrbar ist, in der von der Steuereinheit eine Anlage an einem Modulkörper, also ein Widerstand gegen die Bewegung, erwartet wird.

Die Küchengerätebasis verfügt vorteilhaft über eine Wiegefunktion, so dass in oder auf einem Zubereitungsmodul angeordnete Lebensmittel gewogen werden können. Es ist insbesondere vorgesehen, dass Wiegesensoren an den Stellfüßen der Küchengerätebasis angeordnet sind und/oder dass Wiegesensoren im Aufnahmebereich angeordnet sind.

Alternativ oder zusätzlich dazu ist vorgesehen, dass das Vorhandensein oder Nichtvorhandensein des ersten Modulkörpers und/oder des zweiten Modulkörpers unter Verwendung mindestens eines im ersten Modulkörper und/oder im zweiten Modulkörper vorhandenen Identifikationsmittels - wie vorstehend beschrieben - durchgeführt wird.

Eine erste Ausgestaltung des Küchengerätes sieht vor, dass die Steuereinheit dazu eingerichtet und ausgebildet ist, unter Verwendung des Funktionsmodulverriegelungselementes zu erkennen, ob der erste Modulkörper und/oder der zweite Modulkörper vorhanden sind/ist, indem erkannt wird, ob der Verriegelungsvorsprung des ersten Modulkörpers und/oder der Verriegelungsvorsprung des zweiten Modulkörpers vorhanden sind/ist. Wie beschrieben wird dazu vorzugsweise das Funktionsmodulverriegelungselement zumindest auf einer Teilstrecke zwischen der Funktionsmodulfreigabeposition und der Funktionsmodulverriegelungsposition bewegt, wobei die Steuereinheit anhand des Anliegens des Funktionsmodulverriegelungselementes an mindestens oder genau einem der Verriegelungsvorsprünge erkennt, ob der Modulkörper vorhanden ist oder nicht. Beispielsweise erfolgt das tatsächliche Erkennen durch Auswerten einer Motorspannung oder eines Widerstands oder eines Sensors. Bevorzugt wird das Vorhandensein des Verriegelungsvorsprungs des zweiten Modulkörpers ausgewertet.

Eine weitere Ausgestaltung des Küchengerätes sieht vor, dass die Steuereinheit ferner dazu ausgebildet und eingerichtet ist, das Funktionsmodulverriegelungselement, insbesondere nach einem Bewegen in Richtung der Funktionsmodulverriegelungsposition, wieder in Richtung der Funktionsmodulfreigabeposition zu bewegen, wenn der Verriegelungsvorsprung des ersten Modulkörpers und/oder der Verriegelungsvorsprung des zweiten Modulkörpers nicht vorhanden sind/ist. Wenn folglich an einer Position, an der ein Anschlag an dem Verriegelungsvorsprung des ersten Modulkörpers und/oder dem Verriegelungsvorsprung des zweiten Modulkörpers von der Steuereinheit erwartet wird, kein Widerstand entgegen der Bewegung des Funktionsmodulverriegelungselementes erkannt wird, erfolgt eine Bewegung zurück in die Funktionsmodulfreigabeposition. Insbesondere erfolgt dann eine Anzeige einer Fehlermeldung an mindestens einer Anzeigevorrichtung, beispielsweise an einer Anzeigevorrichtung des Küchengerätes, mit der der Benutzer insbesondere darüber informiert wird, dass eine Verriegelung mit fehlendem ersten und/oder zweiten Modulkörper nicht erfolgen kann.

Diese Ausgestaltung weist den Vorteil auf, dass der Benutzer das Küchengerät nicht in Betrieb nehmen kann, wenn nicht bestimmte Voraussetzungen erfüllt sind, beispielsweise in diesem Fall beide Modulkörper vorhanden sind. Beispielsweise stellt das Vorhandensein beider Modulkörper sicher, dass ein zuverlässiger und sicherer Betrieb erfolgen kann.

Wie vorstehend beschrieben, ist insbesondere gemäß einer Ausgestaltung des Küchengeräts vorgesehen, dass das Vorhandensein des ersten Modulkörpers und/oder des zweiten Modulkörpers erkannt wird, indem die Steuereinheit überprüft, ob das Funktionsmodulverriegelungselement gegen mindestens einen oder genau einen Verriegelungsvorsprung zur Anlage kommt, oder ob das Funktionsmodulverriegelungselement über eine erwartete Position hinausbewegt werden kann. Beim Hinausbewegen ist das Ergebnis, dass der entsprechende Modulkörper nicht vorhanden ist. Wenn es zu einer Anlage kommt, ist das Ergebnis, dass der Modulkörper vorhanden ist.

Vorzugsweise wird nur das Vorhandensein des Verriegelungsvorsprungs des zweiten Modulkörpers von der Verriegelungseinheit ausgewertet. Vorteilhaft ist der erste Modulkörper insbesondere so ausgebildet, dass er nur gemeinsam mit dem zweiten Modulkörper an dem Zubereitungsgefäß angeordnet werden kann. Dadurch wird vorteilhaft sichergestellt, dass das Küchengerät nur in Betrieb genommen werden kann, wenn der zweite Modulkörper vorhanden ist.

Ferner ist die eingangs genannte Aufgabe gelöst durch ein Verfahren zum Erkennen einer ordnungsgemäßen Anordnung eines Funktionsmoduls, insbesondere nach einem der beschriebenen Ausführungsbeispiele, auf einem Zubereitungsgefäß eines Küchengeräts, insbesondere nach einem der beschriebenen Ausführungsbeispiele. Das Funktionsmodul weist mindestens einen ersten Modulkörper mit mindestens einem ersten Verriegelungsvorsprung und mindestens einen zweiten Modulkörper mit mindestens einem zweiten Verriegelungsvorsprung auf. Das Verfahren weist zumindest die folgenden Verfahrensschritte auf:
- Veranlassen einer Bewegung eines Funktionsmodulverriegelungselements durch eine Steuereinrichtung des Küchengeräts, insbesondere in Richtung der Funktionsmodulverriegelungsposition,
- Erkennen einer ordnungsgemäßen Anordnung des Funktionsmoduls durch einen Kontakt zwischen dem Funktionsmodulverriegelungselement und mindestens einem Verriegelungsvorsprung, insbesondere einem Verriegelungsvorsprung des zweiten Modulkörpers, oder
- Erkennen einer nicht ordnungsgemäßen Anordnung des Funktionsmoduls durch Bewegen des Funktionsmodulverriegelungselements über mindestens eine Position hinaus, in der ein Kontakt mit einem Verriegelungsvorsprung erwartet wird.

Weitere Ausgestaltungen der funktionalen und strukturellen Merkmale des Verfahrens ergeben sich aus der Beschreibung der Ausführungsbeispiele des Funktionsmoduls, des Zubereitungsgefäßes und des Küchengeräts sowie deren Funktion.

Ferner ist die eingangs genannte Aufgabe gelöst durch eine Verwendung mindestens eines Verriegelungsvorsprungs an mindestens einem zweiten Modulkörper eines Funktionsmoduls zum Erkennen einer ordnungsgemäßen Anordnung des Funktionsmoduls auf einem Zubereitungsgefäß. Das Funktionsmodul weist mindestens einen ersten Modulkörper mit mindestens einem Verriegelungsvorsprung und mindestens einen zweiten Modulkörper mit mindestens einem zweiten Verriegelungsvorsprung auf. Der erste Modulkörper und der zweite Modulkörper sind zusammenfügbar. Vorteilhaft ist das Funktionsmodul gemäß einem der beschriebenen Ausführungsbeispiele ausgebildet.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Küchengeräts mit Zubereitungsmodul in perspektivischer Ansicht,
- Fig. 2a bis 2c: ein Ausführungsbeispiel eines Deckels in unterschiedlichen Zuständen auf einem Zubereitungsgefäß,
- Fig. 3a bis 3d: eine prinzipielle Darstellung der Funktion eines Sperrmittels,
- Fig. 4: ein Zubereitungsgefäß gemäß Fig. 1 in perspektivischer Ansicht,
- Fig. 5: das Zubereitungsgefäß gemäß Fig. 4 in teilweiser Explosionsdarstellung,
- Fig. 6: einen Teil eines Zubereitungsgefäßes gemäß Fig. 4 in perspektivischer Darstellung,
- Fig. 7: ein Ausführungsbeispiel eines Gehäuses für ein Zubereitungsgefäß,
- Fig. 7a: eine Detailansicht des Gehäuses gemäß Fig. 7,
- Fig. 8: ein Ausführungsbeispiel einer Verriegelungseinheit in perspektivischer Ansicht,
- Fig. 9: das Ausführungsbeispiel eines Zubereitungsmoduls gemäß Fig. 1 ohne Gehäuse,
- Fig. 10a und 10b: ein Ausführungsbeispiel eines Gegenelements mit Übertragungselement und Deckelverriegelungselement,
- Fig. 11: ein Ausführungsbeispiel eines Zubereitungsmoduls in perspektivischer Ansicht von unten,
- Fig. 12a bis 12c: einen beispielhaften Ablauf der Verriegelung eines Werkzeughalters in einem Zubereitungsgefäß,
- Fig. 13: ein Ausführungsbeispiel eines Deckels von der Deckelunterseite,
- Fig. 14: ein Ausführungsbeispiel einer Abstützeinheit an einem Zubereitungsmodul,
- Fig. 15: eine Schnittansicht im Bereich des Deckels eines Zubereitungsmoduls,
- Fig. 16: einen Aufnahmebereich einer Küchengerätebasis in perspektivischer Ansicht in einem ersten Zustand,
- Fig. 17: den Aufnahmebereich gemäß Fig. 16 in einem zweiten Zustand,
- Fig. 18: einen Schnitt durch den Aufnahmebereich mit aufgesetztem Zubereitungsgefäß,
- Fig. 19: eine Detailansicht eines Ausführungsbeispiels eines Gehäuses von der Unterseite,
- Fig. 20: ein Ausführungsbeispiel eines Gehäuses in perspektivischer Ansicht,
- Fig. 21: ein Ausführungsbeispiel einer Küchengerätebasis in einem Teilschnitt,
- Fig. 22: ein Ausführungsbeispiel eines Funktionsmoduls in geschnittener Ansicht,
- Fig. 23: ein Ausführungsbeispiel eines Funktionsmoduls in Explosionsdarstellung,
- Fig. 24: ein Ausführungsbeispiel des Funktionsmoduls gemäß Fig. 23 in perspektivischer Ansicht,
- Fig. 25: eine Draufsicht auf einen zweiten Modulkörper gemäß Fig. 23 und 24,
- Fig. 26: den Modulkörper gemäß Fig. 25 in perspektivischer Ansicht,
- Fig. 27: ein Ausführungsbeispiel eines ersten Modulkörpers in perspektivischer Ansicht von unten, und
- Fig. 28: ein Ausführungsbeispiel eines schematischen Ablaufs eines erfindungsgemäßen Verfahrens.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

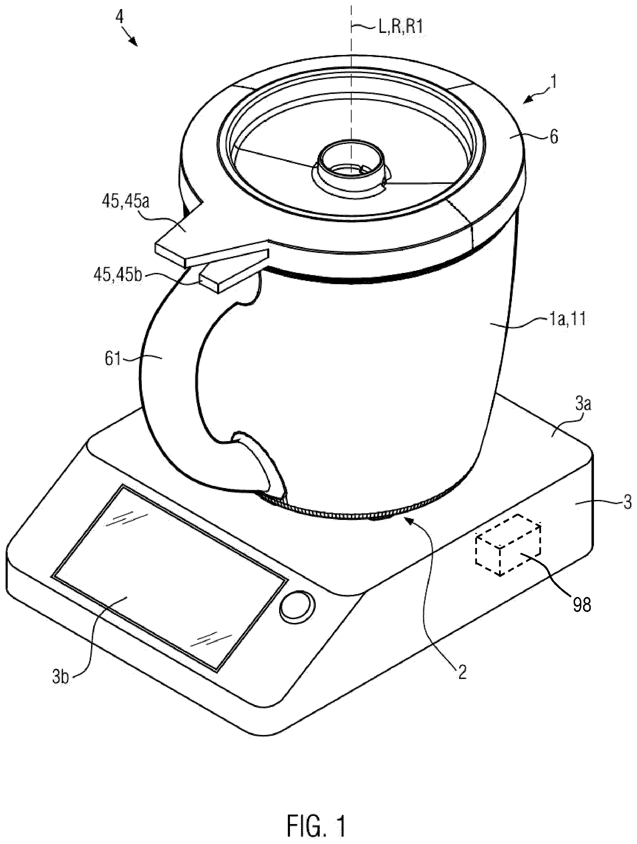

Fig. 1 zeigt ein Ausführungsbeispiel eines Zubereitungsmoduls 1, das zum Anordnen in einem Aufnahmebereich 2 einer Küchengerätebasis 3 eines Küchengerätes 4 vorgesehen ist. Das Zubereitungsmodul 1 umfasst hier ein Zubereitungsgefäß 1a und einen Deckel 6. Das Zubereitungsgefäß 1 ist auf eine flache Oberseite 3a der Küchengerätebasis 3 aufstellbar, um mit der Küchengerätebasis 3 zusammenzuwirken. Die Küchengerätebasis 3 weist mindestens eine kombinierte Anzeige- und Eingabevorrichtung 3b in Form eines Touchscreens auf, um Funktionen des Küchengeräts 4 zu steuern. Zusätzlich kann eine weitere elektromechanische Eingabevorrichtung in Form eines Drehschalters vorhanden sein.

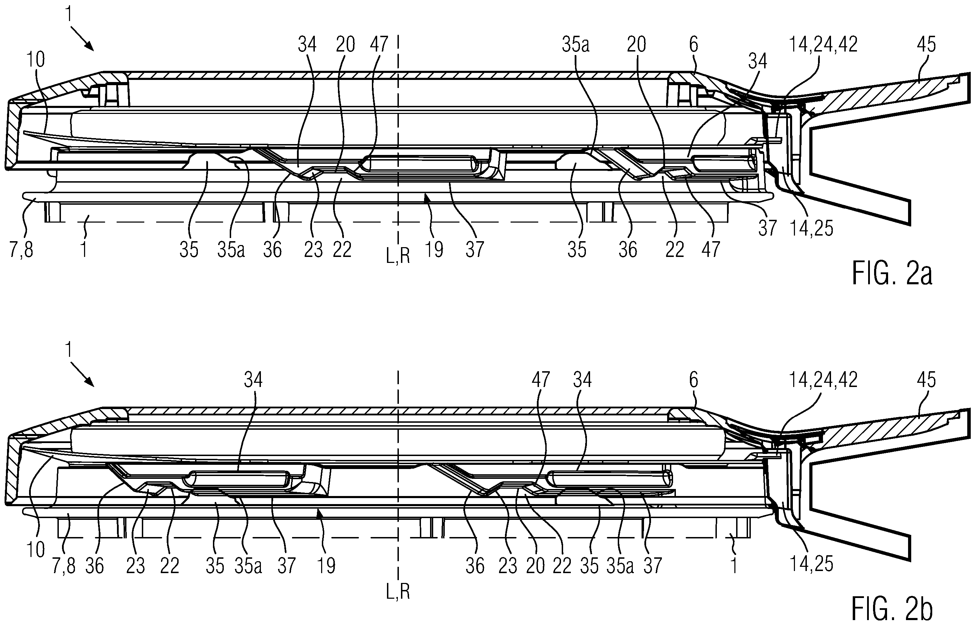

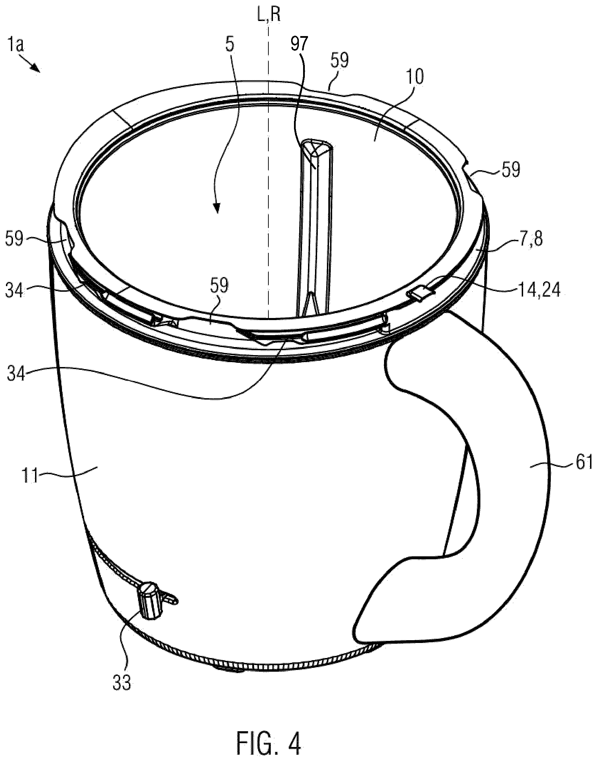

Der Aufbau des Zubereitungsgefäßes 1a ist insbesondere den Fig. 4 bis 12c und Fig. 20 zu entnehmen. Das Zubereitungsgefäß 1a weist mindestens einen Zubereitungsraum 5 - siehe beispielsweise Fig. 4 - zur Aufnahme von Speisen auf. Der Zubereitungsraum 5 ist mit dem Deckel 6 oder einem Funktionsmodul 6a verschließbar, wobei der Deckel 6 mit einer Deckelverriegelungseinheit 7 mit dem Zubereitungsgefäß 1a verriegelbar ist, wie nachfolgend insbesondere mit Bezug auf Fig. 2a bis 2c beschrieben werden wird. Der Deckel 6 weist ein Griffstück 45 auf. Das Griffstück 45 weist ein erstes Griffstückelement 45a und ein zweites Griffstückelement 45b auf, die etwa V-förmig zueinander angeordnet sind.

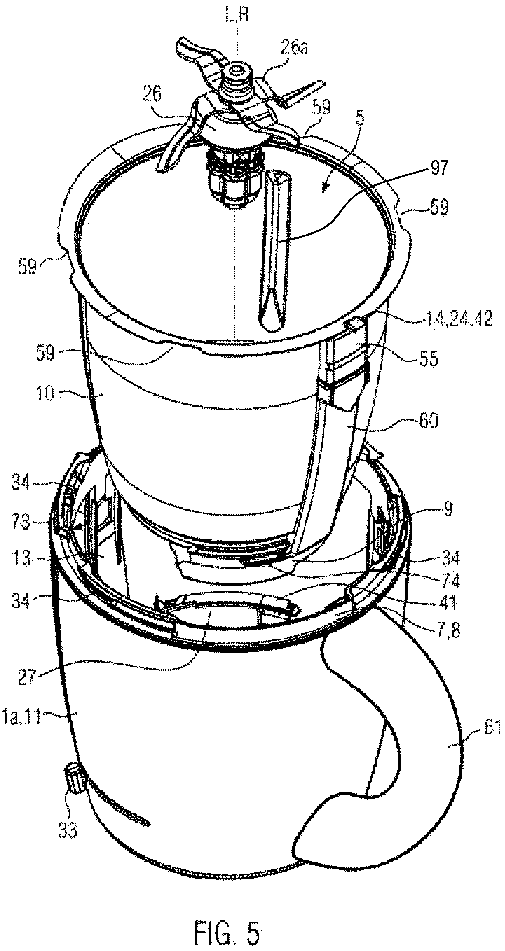

Das Zubereitungsgefäß 1a weist gemäß Fig. 4, Fig. 5 und Fig. 9 einen Innentopf 10 auf, in dem der Zubereitungsraum 5 ausgebildet ist Der Innentopf 10 des Zubereitungsgefäßes 1a ist in ein Gehäuse 11 einbringbar und in dem Gehäuse 11 lösbar verriegelbar. Das Gehäuse 11 ist in den Fig. 5, 6, 7 und 20 separat dargestellt. Fig. 4 zeigt das vollständig montierte Zubereitungsgefäß 1a mit verriegeltem Innentopf 10. Fig. 5 zeigt eine Explosionsansicht, nämlich eine Ansicht des Innentopfes 10 beim Einbringen bzw. Herausnehmen in bzw. aus dem Gehäuse 11, beispielsweise zu Reinigungszwecken. Eine elektrische Schnittstelle 9 des Zubereitungsgefäßes 1a ist fest mit dem Innentopf 10 verbunden. Ferner ist ein Leitungsführungs- und Elektronikkanal 60, der ein nachfolgend beschriebenes Erkennungsmittel 55 beinhaltet, an dem Innentopf 10 angeordnet. Mit dem demontierbaren Werkzeughalter 26 ist ein Werkzeug 26a, hier ein Werkzeug zum Schneiden und Rühren, fest verbunden. Alternativ dazu ist vorgesehen, dass das Werkzeug 26a von dem Werkzeughalter 26 lösbar ist. Der Werkzeughalter 26 ist dann insbesondere mit und ohne Werkzeug 26a in den Innentopf 10 einsetzbar, vorzugsweise auch verriegelbar.

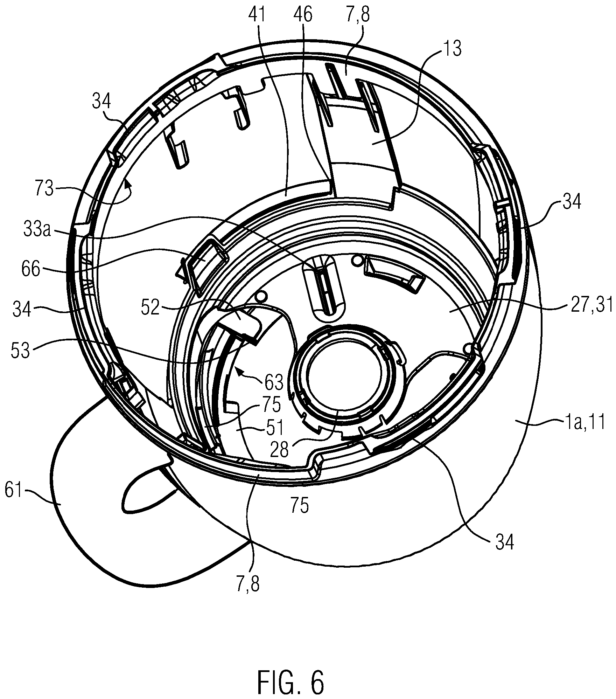

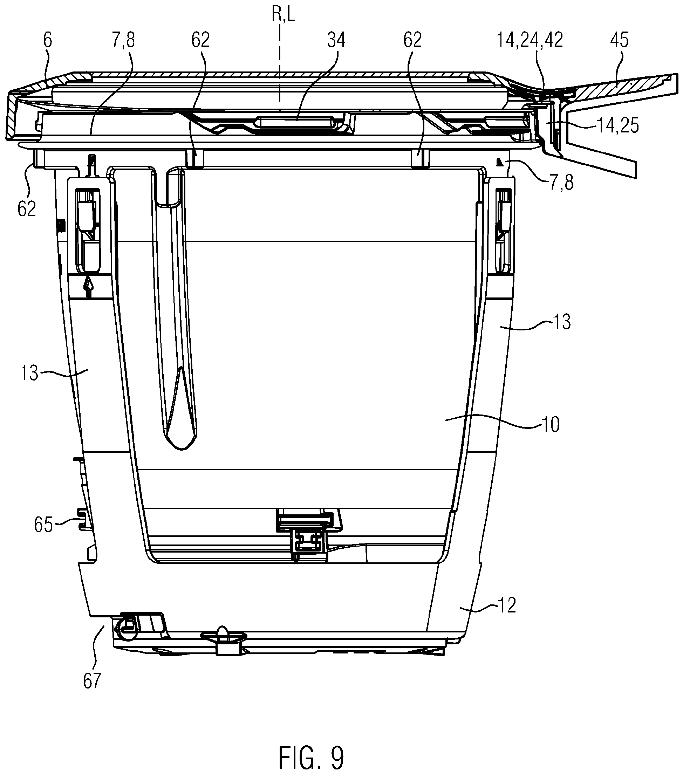

In dem Gehäuse 11 des Zubereitungsgefäßes 1a sind vorteilhaft eine Verriegelungseinheit 27 sowie ein Gegenelement 12, ein Übertragungselement 13 und ein Deckelverriegelungselement 8 einer Deckelverriegelungseinheit 7 um eine Rotationsachse R bzw. eine Längsachse L des Zubereitungsgefäßes 1a rotierbar gehalten. Im montierten Zustand - beispielsweise gemäß Fig. 4 - ist insbesondere das Übertragungselement 13 in einem Zwischenraum zwischen dem Innentopf 10 und dem Gehäuse 11 angeordnet und rotierbar. Das Gegenelement 12, das Übertragungselement 13 und das Deckelverriegelungselement 8 sind derart ausgebildet, dass sie den Innentopf 10 umgeben (siehe insbesondere Fig. 9, in der das Gehäuse 11 weggelassen ist). Fig. 6 zeigt eine perspektivische Ansicht in das Gehäuse 11 ohne Innentopf 10. Fig. 6 zeigt das Zubereitungsgefäß 1a in teilweise montierter Darstellung. Der Innentopf 10 ist entnommen. Die Verriegelungseinheit 27 ist an Stegen 41 auf der Innenseite des Gehäuses 11 zwischen Anschlagspositionen rotierbar.

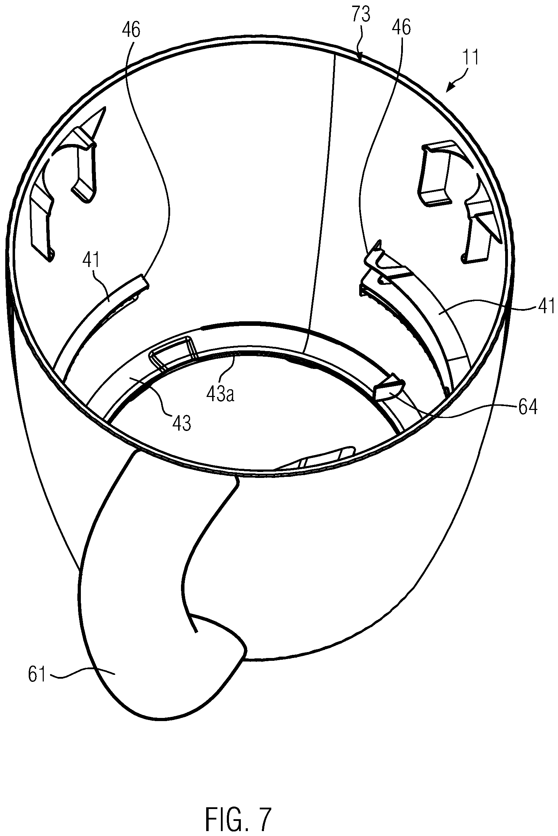

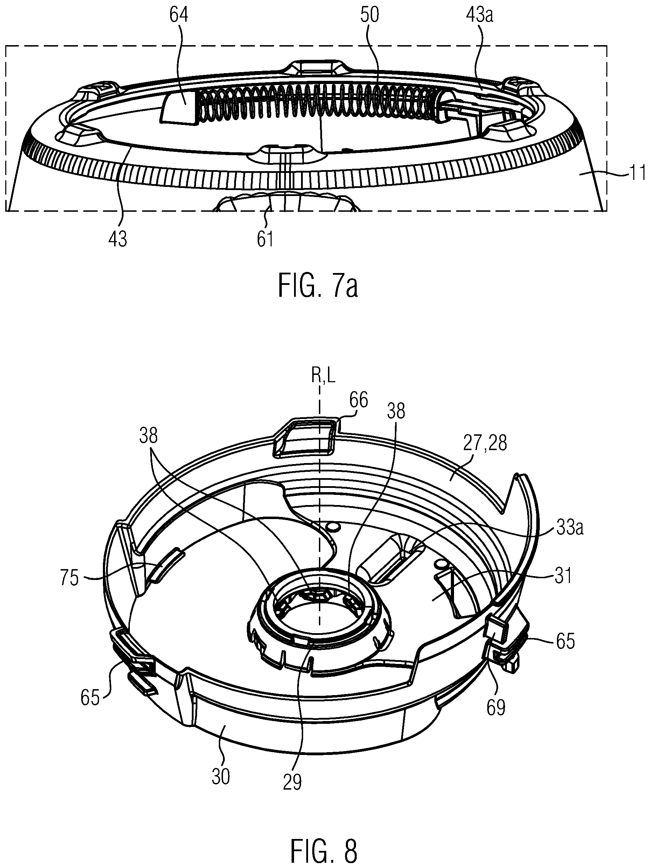

Das Zusammenwirken zwischen den Stegen 41 und beispielsweise einem Führungsstück 66 der Verriegelungseinheit 27 erfolgt vorteilhaft nach dem Nut-Feder-Prinzip. Die Verriegelungseinheit 27 weist zudem Nuten 65 auf, in denen die Stege 41 führbar sind (siehe auch Fig. 8). In dem in Fig. 6 dargestellten Zustand liegt der Träger 28 der Verriegelungseinheit 27 an dem Übertragungselement 13 an, so dass die Verriegelungseinheit 27 bzw. der Träger 28 gemäß Fig. 6 nicht entgegen dem Uhrzeigersinn gedreht werden kann. Ferner kann auch das Übertragungselement 13 nicht rotiert werden, solange die Verriegelungseinheit 27 noch nicht bewegt worden ist. Das Übertragungselement 13 stützt sich in einer Rotationsrichtung gegen den Uhrzeigersinn an einem Endanschlag 46 an einem der Stege 41 ab. Eine Bewegung des Übertragungselements 13 wird aus der in Fig. 6 gezeigten Position - Deckelfreigabeposition - in Rotationsrichtung im Uhrzeigersinn durch einen weiteren Endanschlag 46 an einem Steg 41 begrenzt (siehe Fig. 7). Auf der Innenseite des Gehäuses 11 sind folglich zwei Endanschläge 46 für das Übertragungselement 13 ausgebildet.

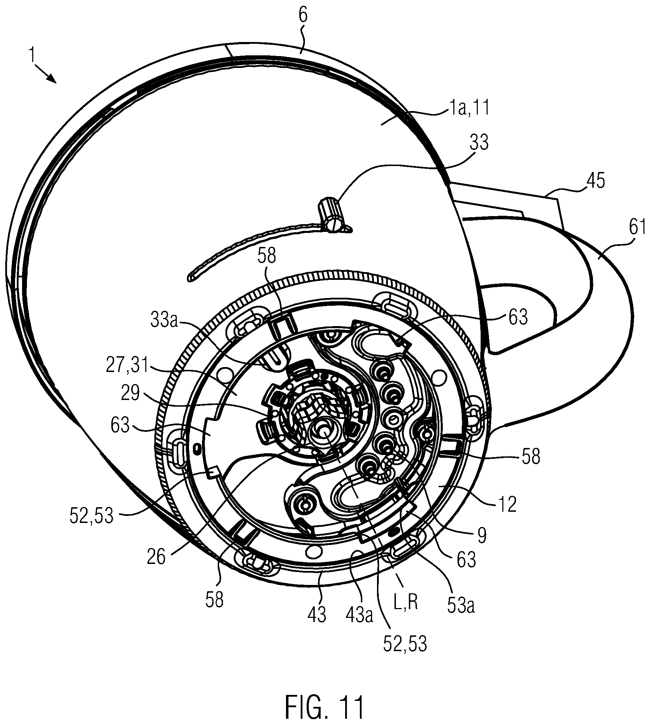

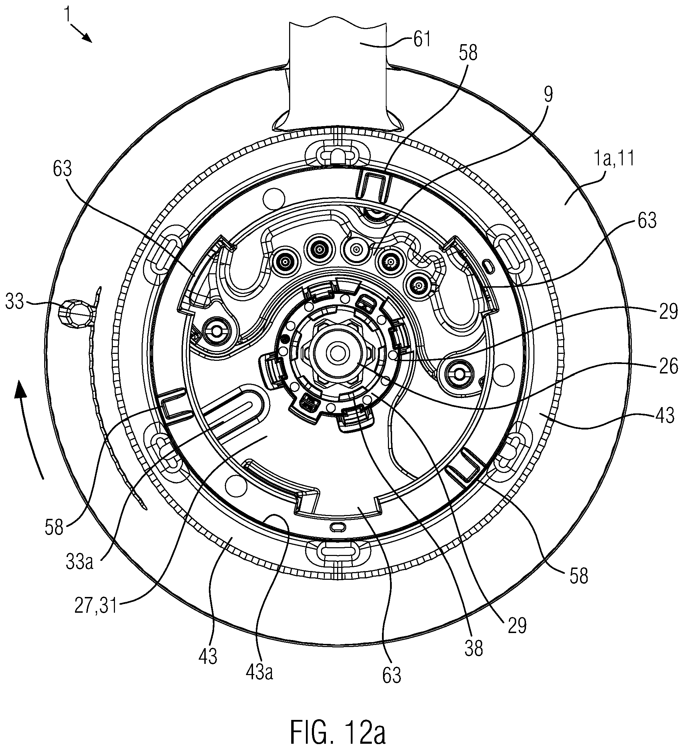

Fig. 7 zeigt eine perspektivische Ansicht in das Gehäuse 11 ohne jegliche Anbauteile, insbesondere folglich nur die Hülle. Das Gehäuse 11 ist bei diesem Ausführungsbeispiel aus einem thermisch isolierenden Material, hier Kunststoff, ausgebildet. Durch den Abstand zwischen Innentopf 10 und Gehäuse 11 wird eine zusätzliche thermische Isolation gewährleistet. Im eingebrachten Zustand ist der Innentopf 10 vollumfänglich und in Bezug auf seine Höhe von dem Gehäuse 11 umgeben (siehe Fig. 4). Auf seiner Innenseite weist das Gehäuse 11 gemäß Fig. 5, 6, 7 und 20 die beschriebenen Stege 41 auf, die zur Lagerung der Verriegelungseinheit 27 dienen. Über die Stege 41 können insbesondere axiale Kräfte in eine Richtung parallel zur Rotationsachse R von der Verriegelungseinheit 27 auf das Gehäuse 11 übertragen werden. Das Gehäuse 11 weist in seinem unteren Bereich einen nach innen ragenden Rand 43 auf, an dessen innenliegender Stirnseite 43a sich das montierte Gegenelement 12 mit Lagerstellen 58 in radialer Richtung abstützt (siehe insbesondere Fig. 11 und 12a bis 12c).

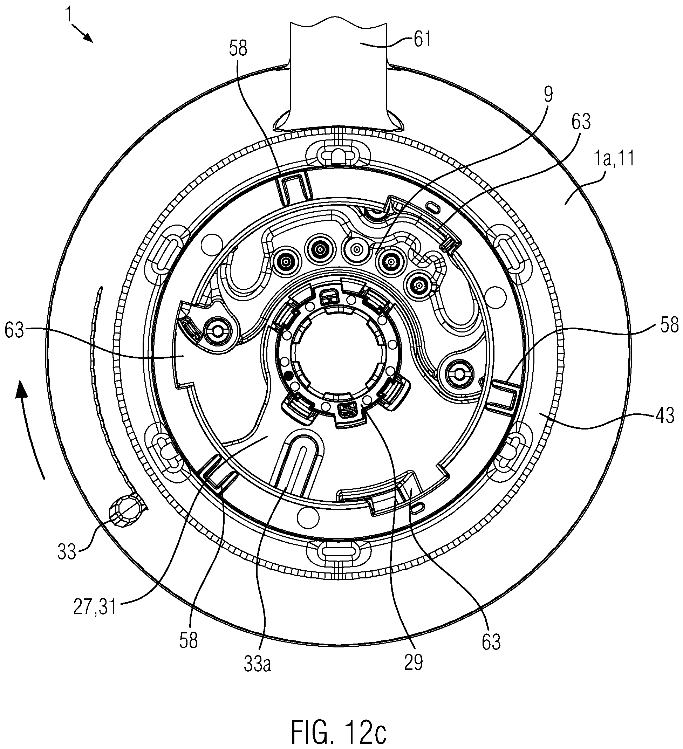

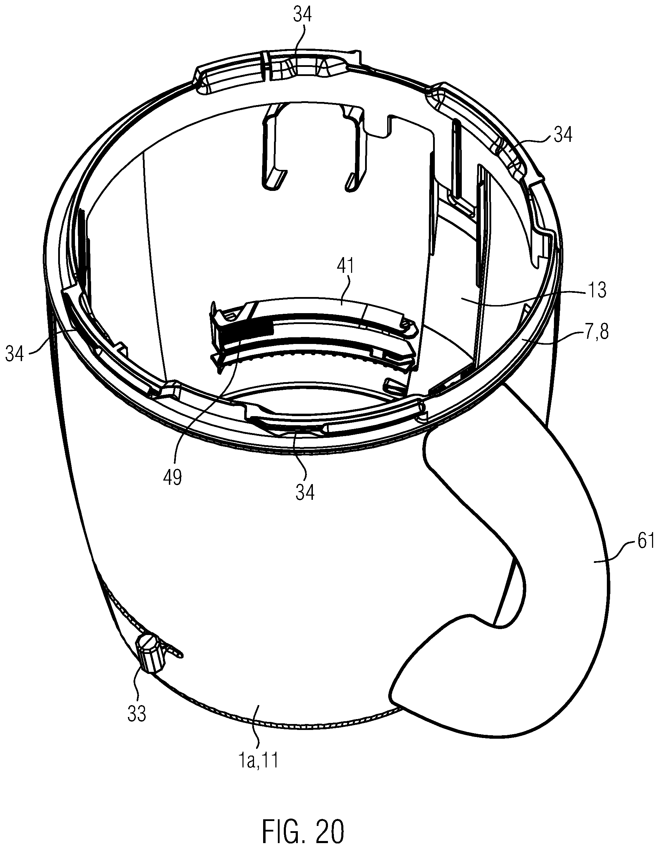

Unterhalb des in Fig. 7 rechts dargestellten Steges 41 ist ein Kanal ausgebildet, in dem gemäß Fig. 20 ein erstes Rückstellelement 49, hier in Form einer Feder, anordenbar ist. Das erste Rückstellelement 49 wirkt im montierten Zustand mit einem Vorsprung 69 an der Verriegelungseinheit 27 (siehe beispielsweise Fig. 8) zusammen, um die Verriegelungseinheit 27 stets in eine Freigabeposition gemäß Fig. 12c zu drängen, damit ein Werkzeughalter 26 einsetzbar ist. Ferner ist an einem unteren Rand 43 ein Stützelement 64 für ein zweites Rückstellmittel 50, hier ebenfalls in Form einer Feder, (siehe insbesondere Fig. 7 und 7a) ausgebildet. In Fig. 7a ist das zweite Rückstellmittel 50 nur zu Verständniszwecken dargestellt. Das Rückstellmittel 50 ist im montierten Zustand in einer Aufnahme 67 an der Verriegelungseinheit 27 gehalten (siehe Fig. 8, 9, 10a und 10b).

Zur Montage des Innentopfes 10 in dem Gehäuse 11 wird zunächst der Innentopf 10 in das Gehäuse 11 eingebracht - siehe Fig. 5. Anschließend wird ein Werkzeughalter 26 mit montiertem Werkzeug 26a, hier einem Schneid- und Rührwerkzeug, durch den Innentopf 10 und durch einen Verriegelungsring 29 eines Trägers 28 der Verriegelungseinheit 27 hindurchgesteckt. Der Verriegelungsring 29 weist beispielsweise einen Innendurchmesser zwischen 29,5 mm und 35,5 mm, insbesondere von etwa 32,5 mm, auf. Der Verriegelungsring 29 ist mit einem Haltesteg 31 mit einem Außenring 30 des Trägers 28 verbunden. Ferner weist der Träger 28 auf einer Innenseite eine Gegenrippe 75 (siehe insbesondere Fig. 8) auf, die - wie nachfolgend beschrieben wird - zum Zusammenwirken mit einer Rippe 74 am Innentopf 10 (siehe Fig. 5) ausgebildet ist. Fig. 12c zeigt beispielhaft eine Ansicht des Zubereitungsgefäßes 1a von unten mit eingebrachtem Innentopf 10, jedoch noch ohne Werkzeughalter 26. Eine elektrische Schnittstelle 9 des Innentopfes 10 ist von der Unterseite des Zubereitungsgefäßes 1a zugänglich, so dass diese mit einer elektrischen Gegenschnittstelle 32 zusammenwirken kann, wenn das Zubereitungsgefäß 1a in einem Aufnahmebereich 2 einer Küchengerätebasis 3 angeordnet ist (siehe Fig. 1, 16 und 17).

Der Innentopf 10 weist, insbesondere gemäß Fig. 5, insbesondere an einem Fußbereich, mindestens eine Rippe 74 auf. Die Rippe 74 ist orthogonal zu einer Rotationsachse des Werkzeugs 26a für den Innentopf 10 ausgerichtet. Vorzugsweise weist das Gehäuse 11, insbesondere die Verriegelungseinheit 27, mindestens eine Gegenrippe 75 auf (siehe Fig. 6 und Fig. 8). Die Gegenrippe 75 ist in der Verriegelungsposition der Verriegelungseinheit 27 derart angeordnet, dass sie mit der Rippe 74 am Innentopf 10 kollidiert, wenn versucht wird, den Innentopf 10 in das Gehäuse 11 einzusetzen. Dadurch wird verhindert, dass der Innentopf 10 in das Gehäuse 11 einsetzbar ist, wenn das Gehäuse 11 - ohne Innentopf 10 - auf einer Küchengerätebasis 3 angeordnet ist, insbesondere wird also verhindert, dass der Innentopf 10 erst nachträglich eingesetzt werden kann. Wenn das Gehäuse 11 - alleine - auf der Küchengerätebasis 3 angeordnet ist, verhindert ein Zusammenwirken mit der Betätigungseinheit 2a, dass eine Entriegelung der Verriegelungseinheit 27 erfolgen kann. In der Entriegelungsposition der Verriegelungseinheit 27 ist der Innentopf 10 in das Gehäuse 11 einsetzbar.

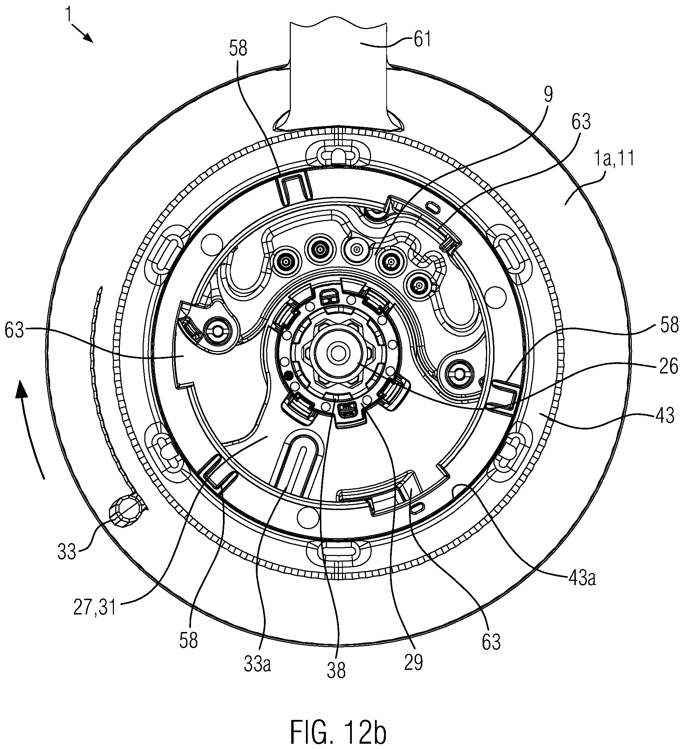

In Fig. 12c befindet sich die Verriegelungseinheit 27 in einer ersten Position - Freigabeposition -, in der der Werkzeughalter 26 den Verriegelungsring 29 durchtreten kann. Die Verriegelungseinheit 27 weist einen Betätigungsgriff 33 auf, mit dem sie von der ersten Position gemäß Fig. 12c und 12b - Freigabeposition - in eine zweite Position gemäß Fig. 12a - Verriegelungsposition - rotierbar ist. Alternativ oder zusätzlich zum ersten Betätigungsgriff 33 weist die Verriegelungseinheit 27 einen alternativen Betätigungsgriff 33a auf, der von der Unterseite des Zubereitungsgefäßes 1a zugänglich ist.

Gemäß Fig. 12b ist der Werkzeughalter 26 eingebracht, jedoch noch nicht mit der Verriegelungseinheit 27 verriegelt. Das Verriegeln erfolgt dadurch, dass der Betätigungsgriff 33 - oder der alternative Betätigungsgriff 33a - durch einen Benutzer in die zweite Position gemäß Fig. 12a verbracht wird. Der Verriegelungsring 29, der von dem Werkzeughalter 26 durchtretbar ist, weist gemäß Fig. 8 und Fig. 12a bis 12c eine Mehrzahl von Haken 38 an seinem Innenumfang auf, die zum formschlüssigen Zusammenwirken mit dem Verriegelungsring 29 ausgebildet sind. Werden die Verriegelungseinheit 27 und damit auch die Haken 38 am Verriegelungsring 29 rotiert, erfolgt eine formschlüssige Verriegelung des Werkzeughalters 26 mit der Verriegelungseinheit 27 durch die Haken 38. Dadurch, dass der Werkzeughalter 26 auch den Innentopf 10 durchtritt, ist durch die Verriegelung des Werkzeughalters 26 auch der Innentopf 10 mit dem Gehäuse 11 verriegelt. Zu Reinigungszwecken kann der Werkzeughalter 26 mit dem Werkzeug 26a und der Innentopf 10 in umgekehrter Reihenfolge entnommen werden, insbesondere indem eine Entriegelung durch Verschieben des Betätigungsgriffs 33 aus der zweiten Position gemäß Fig. 12a in die erste Position gemäß Fig. 12b erfolgt.

Die Verriegelungseinheit 27 weist ein erstes Rückstellmittel 49 (siehe Fig. 20) in Form einer Rückstellfeder auf. Das erste Rückstellmittel 49 wirkt zwischen dem Gehäuse 11 und der Verriegelungseinheit 27, um die Verriegelungseinheit 27 zumindest bei nicht eingesetztem Werkzeughalter 26 in Richtung einer Freigabeposition für den Werkzeughalter 26 gemäß Fig. 12c zu drängen. Dadurch befindet sich auch der Betätigungsgriff 33 stets in der Position gemäß Fig. 12c. Zudem ist ein zweites Rückstellmittel 50, insbesondere ebenfalls in Form einer Rückstellfeder, vorgesehen, das zwischen der Verriegelungseinheit 27 und dem Gegenelement 12 wirkt. Das zweite Rückstellmittel 50 drängt das Gegenelement 12 in Richtung einer zweiten Position, die hier der Verriegelungsposition entspricht, so dass das Zubereitungsgefäß 1a nicht im Aufnahmebereich 2 einer Küchengerätebasis 3 anordenbar ist, wenn kein Werkzeughalter 26 vorhanden oder ein vorhandener Werkzeughalter 26 nicht - wie in Fig. 12a dargestellt - verriegelt ist. Im in Fig. 12b dargestellten Zustand ist ein Aufbringen in den Aufnahmebereich 2 nicht möglich.

Das Deckelverriegelungselement 8, das Übertragungselement 13 und das Gegenelement 12 sind gemäß Fig. 6, Fig. 9, Fig. 10a und Fig. 10b drehfest miteinander verbunden, so dass sie um eine Rotationsachse R innerhalb des Gehäuses 11 des Zubereitungsgefäßes 1a rotierbar lagerbar sind (siehe insbesondere Fig. 6 und Fig. 9). Das Deckelverriegelungselement 8 stützt sich auf einer Innenfläche des Gehäuses 11 bzw. der Hülle an einem oberen Rand 73 mit einer Mehrzahl radialer Lagerstellen 62 ab (siehe Fig. 6, 7 und 10b). Die Einheit aus Deckelverriegelungselement 8, Übertragungselement 13 und Gegenelement 12 ist insbesondere über die Lagerstellen 62 des Deckelverriegelungselements 8 und die Lagerstellen 58 des Gegenelements 12 in dem Gehäuse 11 gelagert.

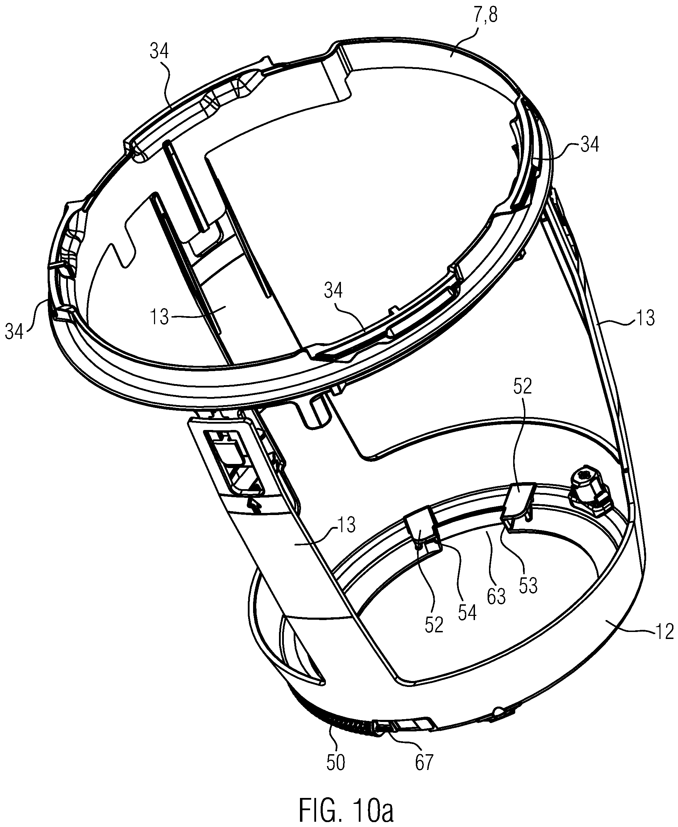

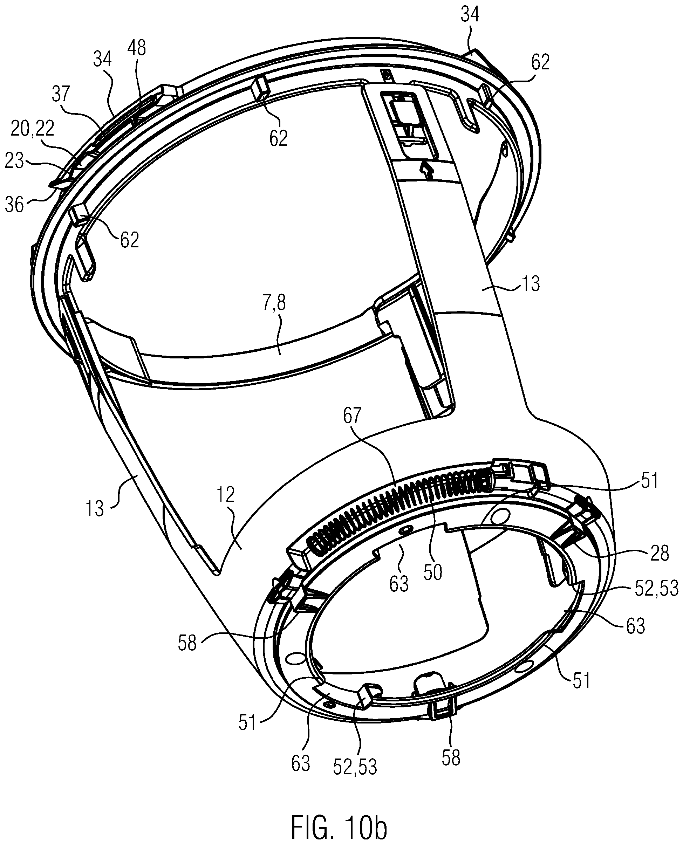

Bei diesem Ausführungsbeispiel sind - wie insbesondere in Fig. 9 und 10a, 10b dargestellt - das Gegenelement 12 und das Übertragungselement 13 einstückig ausgebildet, wobei die Einheit aus Gegenelement 12 und Übertragungselement 13 formschlüssig mit dem Deckelverriegelungselement 8 verbunden ist. Das Übertragungselement 13 weist drei sich im Wesentlichen senkrecht erstreckende Arme auf, an deren Enden jeweils ein Verbinden mit dem Deckelverriegelungselement 8 erfolgt ist.

Im montierten Zustand, insbesondere gemäß Fig. 5, 6 und 9, ist das Gegenelement 12 zwischen einer ersten Position und einer zweiten Position rotierbar. Dadurch, dass das Deckelverriegelungselement 8 und das Gegenelement 12 über das Übertragungselement 13 drehfest miteinander verbunden sind, befindet sich das Deckelverriegelungselement 8 in der Deckelfreigabeposition, wenn sich das Gegenelement 12 in der ersten Position befindet, und befindet sich das Deckelverriegelungselement 8 in der Deckelverriegelungsposition, wenn sich das Gegenelement 12 in der zweiten Position befindet. Durch dieses Zusammenwirken kann durch eine Rotation des Gegenelements 12, insbesondere bewirkt durch die Küchengerätebasis 3, eine nachfolgend zu Fig. 2a bis 2c beschriebene, automatische Ver- und Entriegelung des Deckels 6 oder eines Funktionsmoduls 6a bewirkt werden. Das Gegenelement 12 ist zum Zusammenwirken mit der Küchengerätebasis 3, insbesondere mit der Betätigungseinheit 2a im Aufnahmebereich 2 ausgebildet.

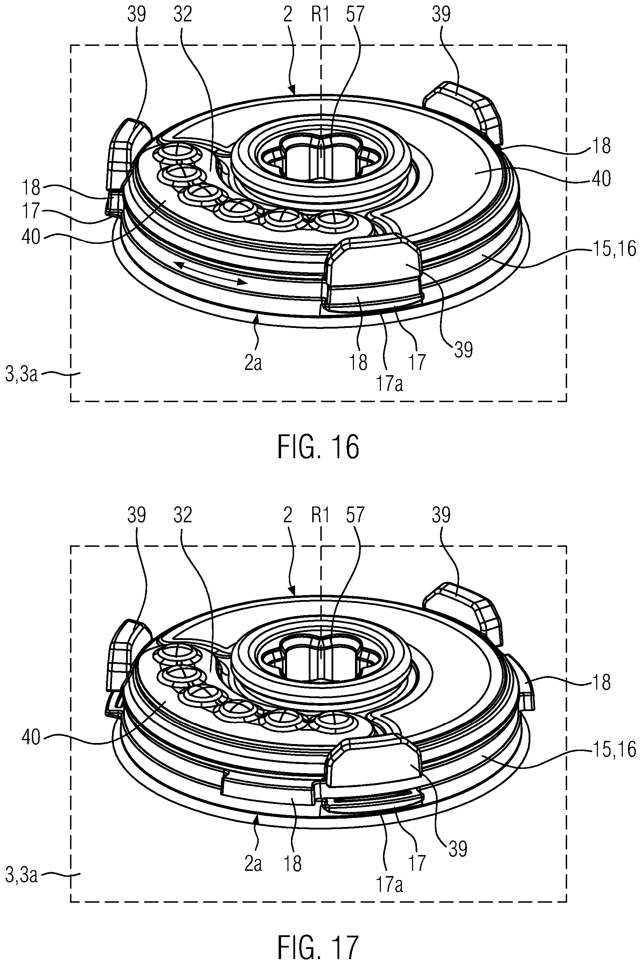

Das Zubereitungsmodul 1, hier das Zubereitungsgefäß 1a mit dem Deckel 6, ist in den Aufnahmebereich 2 einer Küchengerätebasis 3, wie in Fig. 1 dargestellt, einbringbar. Insbesondere ist das Zubereitungsgefäß 1a mit seinem Fußbereich - mit und ohne Deckel 6 - in dem Aufnahmebereich 2 anordenbar. Fig. 16, Fig. 17 und Fig. 21 zeigen eine Detailansicht einer Oberseite 3a einer Küchengerätebasis 3 mit Aufnahmebereich 2. Der Aufnahmebereich 2 weist eine Betätigungseinheit 2a mit einer Antriebseinheit 15, ein um eine Rotationsachse R1 rotierbar gehaltenes Betätigungselement 16 und drei ortsfeste Halteelemente 17 auf. Die Halteelemente 17 sind in einem Winkel von etwa 120° zueinander angeordnet und weisen jeweils eine konvex gewölbte Haltefläche 17a auf, die in Richtung der Oberseite 3a orientiert ist.

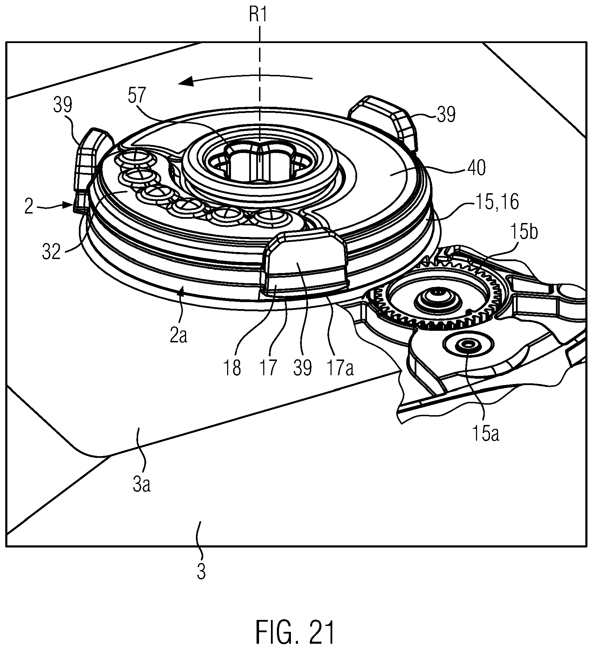

Um das Betätigungselement 16 bewegen zu können, weist die Antriebseinheit 15, insbesondere gemäß Fig. 21, mindestens einen Motor 15a und mindestens ein Zahnrad 15b auf. Fig. 21 zeigt ein Ausführungsbeispiel einer Küchengerätebasis 3 mit teilweisem Ausschnitt. Das Zahnrad 15b steht mit dem Betätigungselement 16 in formschlüssigem Eingriff, um das Betätigungselement 16 zu rotieren. Beispielsweise weist das Betätigungselement 16 eine Verzahnung auf, in die das Zahnrad 15b eingreift - nicht dargestellt. Der Motor 15a, von dem nur das Wellenende dargestellt ist, ist unmittelbar mit dem Zahnrad 15b verbunden.

Oberhalb der Halteelemente 17 ist das Betätigungselement 16 rotierbar angeordnet. Das Betätigungselement 16 weist drei Mitnehmerelemente 18 auf, die sich in der in Fig. 16 dargestellten, ersten Position in einer Richtung parallel zur Rotationsachse R1 des Betätigungselements 16 vollständig überdecken. Oberhalb der Mitnehmerelemente 18 ist jeweils ein Einführelement 39 angeordnet, das wie das Halteelement 17 ortsfest ist. Gemäß Fig. 16 ist das Einführelement 39 in der ersten Position ebenfalls in einer Richtung parallel zur Rotationsachse R1 in vollständiger Überdeckung mit dem Mitnehmerelement 18 bzw. dem Halteelement 17. Die elektrischen Kontakte der Gegenschnittstelle 32, die zum Zusammenwirken mit der elektrischen Schnittstelle 9 des Zubereitungsgefäßes, z. B. gemäß Fig. 11, ausgebildet ist, sind mit einer Kontaktabdeckung 40 abgedeckt. Die Betätigungseinheit 2a umgibt eine zentral angeordnete Werkzeugschnittstelle 57, die zum formschlüssigen Zusammenwirken mit dem Werkzeughalter 26 (siehe Fig. 11) ausgebildet ist und mit diesem zusammengefügt wird, wenn das Zubereitungsgefäß 1a im Aufnahmebereich 2 angeordnet wird.

Die Halteelemente 17 und/oder die Mitnehmerelemente 18 und/oder die Einführelemente 39 weisen z. B. eine Breite - in Umfangsrichtung - zwischen etwa 23 mm und 27 mm auf. Insbesondere beträgt die Breite etwa 25 mm. Die Mitnehmerelemente 18 haben - in einer Richtung parallel zur Rotationsachse R - vorzugsweise eine Höhe zwischen 3,5 mm und 5,5 mm. Insbesondere beträgt die Höhe etwa 4,5 mm. Die Betätigungseinheit 2a hat ausgehend von der Oberseite 3a der Küchengerätebasis 3 insbesondere etwa eine Höhe - bis zur Oberseite der Kontaktabdeckung 40 - von etwa 16 mm bis 20 mm. Insbesondere beträgt die Höhe etwa 18 mm. Die Einführelemente 39 haben ausgehend von der Oberseite 3a der Küchengerätebasis 3 bevorzugt etwa eine Höhe zwischen 21 mm und 25 mm. Insbesondere beträgt die Höhe etwa 23 mm. Die Betätigungseinheit 2a hat - ausgehend von der Rotationsachse R1 - insbesondere einen Radius von 45 mm bis 55 mm. Insbesondere beträgt der Radius etwa 50 mm. Gleiches gilt für das Betätigungselement 16 und die Kontaktabdeckung 40. Die Einführelemente 39 und/oder die Mitnehmerelemente 18 und/oder die Halteelemente 17 weisen - ausgehend von der Rotationsachse R1 - vorzugsweise einen Radius von etwa 49 mm bis 61 mm auf. Insbesondere beträgt der Radius etwa 53,5 mm.

Um eine mechanische Funktion an dem Zubereitungsgefäß 1a zu bewirken, ist das Betätigungselement 16 mit den Mitnehmerelementen 18 von der Antriebseinheit 15 zumindest in eine zweite Position gemäß Fig. 17 rotierbar. In der zweiten Position sind die Mitnehmerelemente 18 aus der Überdeckung in einer Richtung parallel zur Rotationsachse R1 mit den Halteelementen 17 und den Einführelementen 39 herausgeschwenkt.

Die Betätigungseinheit 2a steht auf der Oberseite 3a der Küchengerätebasis 3 hervor, so dass sie zumindest teilweise in eine Unterseite des Zubereitungsgefäßes 1a eintreten kann, wenn das Zubereitungsgefäß 1a in den Aufnahmebereich 2 eingesetzt wird.

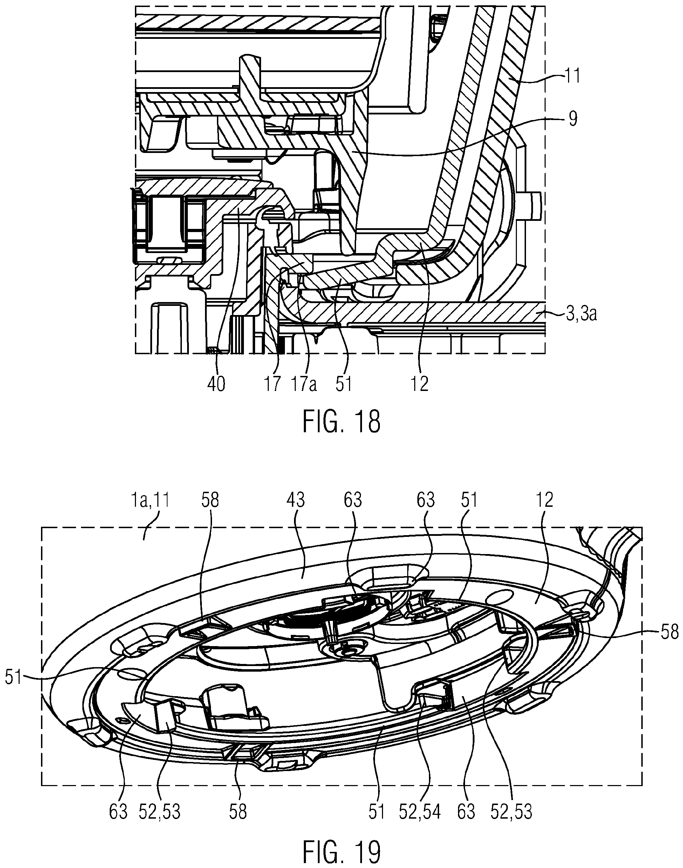

Im aufgebrachten Zustand des Zubereitungsgefäßes 1a im Aufnahmebereich 2 einer Küchengerätebasis 3, beispielsweise gemäß Fig. 11, 16, 17, 18 und 19, durchtreten jeweils ein Einführelement 39, ein Mitnehmerelement 18 und ein Halteelement 17 das Gegenelement 12 jeweils durch eine der Ausnehmungen 63. Die Ausnehmungen 63 sind so dimensioniert, dass ein Eintreten nur erfolgen kann, wenn sich das Einführelement 39, das Mitnehmerelement 18 und das Halteelement 17 in einer Richtung parallel zur Rotationsachse R1 vollständig überdecken. Die Ausnehmungen 63 haben insbesondere eine Breite - in Umfangsrichtung - von etwa 24 mm bis 28 mm, insbesondere von etwa 26 mm. Ferner tritt die Betätigungseinheit 2a durch eine zentrale Öffnung von unten in das Gegenelement 12 hinein (siehe Fig. 10b und Fig. 19). Die zentrale Öffnung hat einen Radius von etwa 47 mm bis 57 mm, insbesondere von etwa 52 mm.

Die elektrische Gegenschnittstelle 32 der Küchengerätebasis 3 wird beim Einbringen in den Aufnahmebereich 2 mit der elektrischen Schnittstelle 9 des Zubereitungsgefäßes 1a, beispielsweise gemäß Fig. 11, kontaktiert. Ferner wird auch die Werkzeugschnittstelle 57 des Aufnahmebereiches 2 mit der korrespondierenden Schnittstelle des Werkzeughalters 26 (siehe insbesondere Fig. 11) verbunden.

Die Anzeige- und Eingabevorrichtung 3b ist an einer Gerätevorderseite der Küchengerätebasis 3 angeordnet, gegenüberliegend befindet sich eine Geräterückseite (siehe Fig. 1). Wenn das Zubereitungsgefäß 1a im Aufnahmebereich 2 angeordnet ist, ist der Handgriff 61 des Zubereitungsgefäßes 1a in Richtung der Anzeige- und Eingabevorrichtung 3b ausgerichtet. Die Betätigungseinheit 2a ist ferner so ausgerichtet, dass ein Einführelement 30 der Betätigungseinheit 2a etwa auf einer gedachten Linie mit dem Handgriff 61 ausgerichtet ist. Das Einführelement 39 ist in Richtung der Geräterückseite orientiert. Die Betätigungseinheit 2a ist im Wesentlichen kreisförmig ausgebildet. Ausgehend von dem Einführelement 39, das auf einer Linie mit dem Handgriff bzw. einer Mittelachse der Anzeige- und Eingabevorrichtung 3b ausgerichtet ist, sind die zwei weiteren Einführelemente 39 auf dem Umfang gleichmäßig verteilt. Auf dem Umfang gegenüberliegend zu dem vorbeschriebenen Einführelement 39 ist die elektrische Gegenschnittstelle 32 angeordnet (siehe Fig. 16 und 17). Die elektrische Gegenschnittstelle 32 ist auf dem Umfang in Richtung des Handgriffs 61 bzw. der Gerätevorderseite orientiert. Diese Anordnung unterstützt das Positionieren des Zubereitungsmoduls 1, wenn dieses z. B. leicht nach vorne gekippt oder nach hinten gekippt aufgesetzt wird. Entweder führt das hintere Einführelement 39 (das auf der gedachten Linie angeordnete, auf der Rückseite der Küchengerätebasis 3 zugewandten Seite) oder die beiden vorderen Einführelemente 39 (die seitlich von der elektrischen Gegenschnittstelle 32 angeordneten), die die grobe vordere Ausrichtung im Hinblick auf die Kontakte der Gegenschnittstelle 32 unterstützen.

Das Rotieren der Mitnehmerelemente 18 zwischen einer ersten Position gemäß Fig. 16 und der zweiten Position gemäß Fig. 17 relativ zu den Halteelementen 17 und den Einführelementen 39 wird vorteilhaft verwendet, um eine Rotation des Gegenelementes 12 zu bewirken, z. B. um eine mechanische Funktion innerhalb des Zubereitungsgefäßes 1a zu bewirken, insbesondere um das Zubereitungsgefäß 1a mit der Küchengerätebasis 3 zu verriegeln. Das Rotieren erfolgt vorzugsweise in einem Winkel von etwa 30°, wobei vorzugsweise zunächst ein Winkel von etwa 32° angefahren wird und anschließend ein Rückstellen von etwa 2° erfolgt, um Spannungen in den bewegten Bauteilen zu reduzieren.

Bei einer Rotation des Betätigungselementes 16 werden die Mitnehmerelemente 18 rotiert, die jeweils mit einer Mitnehmergegenfläche 53 des Mitnehmergegenelementes 52 des Gegenelements 12 zusammenwirken (siehe Fig. 10a, 10b und Fig. 19) und dadurch auch eine Rotation des Gegenelementes 12 in dem Zwischenraum zwischen Innentopf 10 und Gehäuse 11 bewirken. Das Gegenelement 12 weist eine Mehrzahl in Richtung der Rotationsachse R1 vorstehender Wirkabschnitte 51 auf, die jeweils ein Mitnehmergegenelement 52 mit einer Mitnehmergegenfläche 53 aufweisen. Wenn das Zubereitungsgefäß 1a in den Aufnahmebereich 2 eingebracht ist, sind die Rotationsachsen R, R1 sowie die Längsachse L vorzugsweise koaxial. Die Mitnehmergegenfläche 53 ist entlang einer Richtung parallel zur Rotationsachse R1 versetzt zu dem Wirkabschnitt 51 angeordnet, befindet sich nämlich oberhalb des Wirkabschnitts 51. Durch die Rotation des Gegenelementes 12 werden die Wirkabschnitte 51 des Gegenelementes 12 unter die konkav gewölbten Halteelemente 17 rotiert, wodurch das Zubereitungsgefäß 1a mit der Küchengerätebasis 3 verriegelt wird. Der verriegelte Zustand ist im Schnitt in Fig. 18 dargestellt.

Da das Gegenelement 12 drehfest um die Rotationsachse R mit dem Übertragungselement 13 und dem Deckelverriegelungselement 8 verbunden ist, wird bei einer Bewegung des Gegenelementes 12 gleichzeitig der Deckel 6 oder ein Funktionsmodul 6a mit dem Zubereitungsgefäß 1a ver- oder entriegelt, indem die Verriegelungskulissen 34 - wie nachstehend zu Fig. 2a bis 2c beschrieben - mit Nocken 35 an der Deckelunterseite des Deckels 6 zusammenwirken.

Bei dem dargestellten Ausführungsbeispiel erfolgt folglich eine vorteilhafte Verriegelung des Zubereitungsgefäßes 1a mit der Küchengerätebasis 3 gleichzeitig mit einer Verriegelung des Deckels 6 mit dem Zubereitungsgefäß 1a. Ein Entriegeln des Zubereitungsgefäßes 1a von der Küchengerätebasis 3 erfolgt in umgekehrter Reihenfolge, nämlich indem die Mitnehmerelemente 18 in entgegengesetzter Richtung mit dem Mitnehmergegenelement 52 des Gegenelementes 12, insbesondere mit einer Rückstellfläche 54, zusammenwirken und das Gegenelement 12 so weit in entgegengesetzter Richtung rotieren, bis sich die Wirkabschnitte 51 des Gegenelementes 12 in einer Richtung parallel zur Rotationsachse R nicht mehr mit den Halteelementen 17 überdecken, so dass die Halteelemente 17, die Mitnehmerelemente 18 und die Einführelemente 39 bei einem Abheben des Zubereitungsgefäßes 1a aus dem Aufnahmebereich 2 wieder durch die Ausnehmungen 63 nach außen treten können (siehe insbesondere Fig. 18).

Gleichzeitig wird durch das Rotieren des Gegenelementes 12 in entgegengesetzter Richtung über das Übertragungselement 13 auch das Deckelverriegelungselement 8 in entgegengesetzter Richtung, nämlich in Richtung der Deckelfreigabeposition, rotiert, so dass der Deckel 6 in der Deckelfreigabeposition entnehmbar ist.

Liegt während des Rotierens in Richtung der Deckelfreigabeposition allerdings ein Druck im Zubereitungsraum 5 an oder zieht der Benutzer am Deckel 6, gelangt ein Sperrmittel 19 in die Sperrposition - wie nachfolgend für Fig. 2a bis 2c beschrieben - und verhindert damit ein weiteres Rotieren des Deckelverriegelungselementes 8, aber auch des Gegenelementes 12. Diese Blockierung wird von der Antriebseinheit 15 bzw. von der Steuereinheit anhand einer gesteigerten Stromstärke erkannt und das Rotieren gestoppt.

Bevorzugt ist vorgesehen, dass dann zunächst wieder eine Rotation in entgegengesetzter Richtung erfolgt, nämlich die Wirkabschnitte 51 wieder unter die Haltelemente 17 und die Verriegelungskulissen 34 wieder in die Deckelverriegelungsposition gedreht werden. Erst nach Ablauf einer vorbestimmten Zeit oder durch erneute Veranlassung eines Benutzers wird ein erneuter Vorgang der Entriegelung bzw. der Deckelfreigabe gestartet.

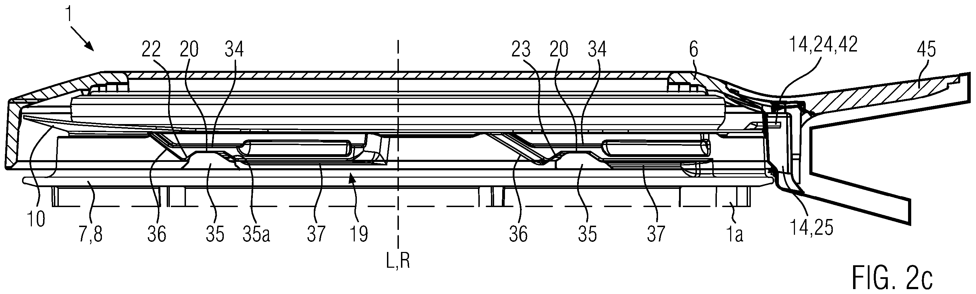

Fig. 2a bis Fig. 2c zeigen einen oberen Teil eines Zubereitungsmoduls 1, nämlich einen auf ein Zubereitungsgefäß 1a aufgebrachten Deckel 6 in unterschiedlichen Verriegelungszuständen. Die Funktionalität ist vorzugsweise auf ein Funktionsmodul 6a anstelle des Deckels 6 übertragbar. Der Deckel 6 weist beispielsweise eine Gesamthöhe - in einer Richtung parallel zur Längsachse L - zwischen etwa 24 mm und 28 mm auf. Insbesondere beträgt die Gesamthöhe etwa 26 mm. An einem oberen Rand des Zubereitungsgefäßes 1a ist die Deckelverriegelungseinheit 7 angeordnet, die mit dem Deckel 6 interagieren kann. Fig. 2a zeigt die Deckelverriegelungseinheit 7 in der Deckelfreigabeposition, Fig. 2b zeigt die Deckelverriegelungseinheit 7 in der Deckelverriegelungsposition und Fig. 2c zeigt die Deckelverriegelungseinheit 7 in einer Position zwischen der Deckelverriegelungsposition und der Deckelfreigabeposition, in der sich ein Sperrmittel 19 der Deckelverriegelungseinheit 7 in einer Sperrposition befindet. Dadurch, dass sich das Sperrmittel 19 in der Sperrposition befindet, ist ein Bewegen der Deckelverriegelungseinheit 7 in Richtung der Deckelfreigabeposition gemäß Fig. 2a verhindert.

Das Sperrmittel 19 befindet sich gemäß Fig. 2c in der Sperrposition, da eine Kraft parallel zu einer Längsachse L des Zubereitungsgefäßes 1a von dem Zubereitungsgefäß 1a weg auf den Deckel 6 wirkt. Diese Kraft wird entweder dadurch verursacht, dass eine Kraft aus dem Zubereitungsraum 5 auf den Deckel 6 wirkt, beispielsweise ausgehend von einer rotierenden Trombe von Speisen oder einem in dem Zubereitungsraum 5 vorherrschenden Druck, oder dadurch, dass ein Benutzer versucht, den Deckel 6 vom Zubereitungsgefäß 1a abzuheben.

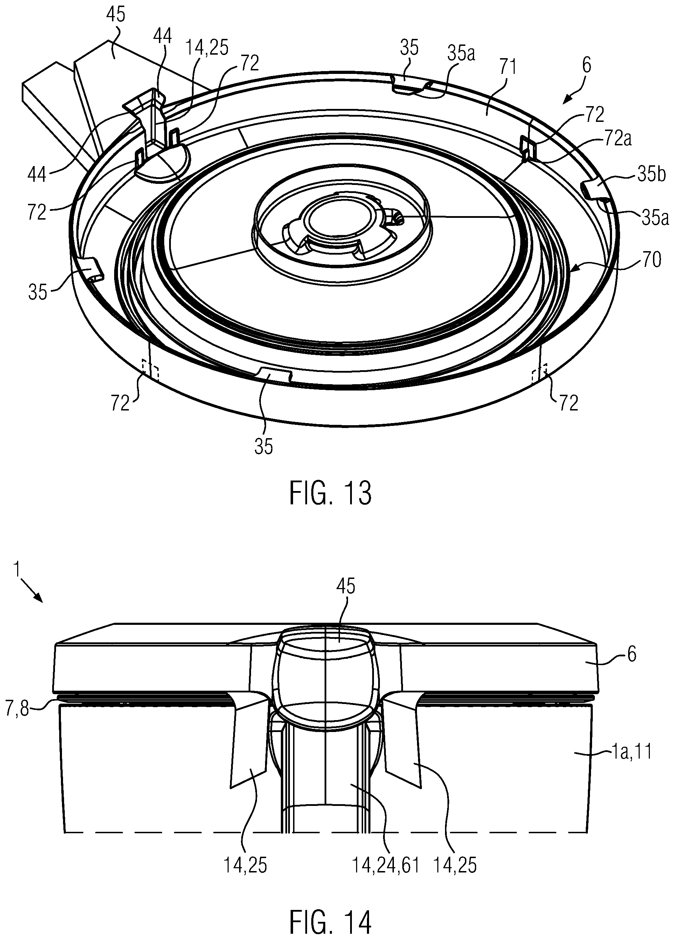

Gemäß Fig. 2c ist die Deckelverriegelungseinheit 7 zumindest teilweise in Richtung der Deckelfreigabeposition bewegt, wenn sich das Sperrmittel 19 in der dargestellten Sperrposition befindet. Das Sperrmittel 19 gelangt durch eine translatorische Bewegung des Deckels 6, insbesondere in einer Richtung parallel zur Längsachse L des Zubereitungsgefäßes 1a, in die Sperrposition (siehe Fig. 2c). Das Sperrmittel 19 weist eine Mehrzahl erster Sperrflächen 20, eine Mehrzahl zweiter Sperrflächen 23 und eine Mehrzahl von Sperrelementen 21 auf. Eine translatorische Bewegung des Deckels 6 parallel zur Längsachse L wird durch ein Anliegen der Sperrelemente 21 an der jeweiligen ersten Sperrfläche 20 begrenzt. Die Sperrelemente 21 sind hier als radial nach innen vorstehende Nocken 35 am Deckel 6 ausgebildet (siehe auch Fig. 13), die ebenfalls zur Verriegelung des Deckels 6 dienen.

Die Nocken 35 haben beispielsweise eine Breite von etwa 10 mm bis 14 mm, insbesondere von etwa 12 mm, und/oder eine Tiefe - in radialer Richtung - zwischen 5 mm und 7 mm, insbesondere von etwa 6 mm, und/oder eine Höhe - in einer Richtung parallel zur Rotationsachse R - zwischen 3,5 mm und 5,5 mm, insbesondere von etwa 4,5 mm.

Die ersten Sperrflächen 20 und die zweiten Sperrflächen 23 sind Flächen in einer Ausnehmung 22 in einer Verriegelungskulisse 34, die an einem Deckelverriegelungselement 8 der Deckelverriegelungseinheit 7 ausgebildet ist. Die ersten Sperrflächen 20 weisen beispielsweise eine Breite zwischen 5,5 mm und 7,5 mm, insbesondere von etwa 6,5 mm, auf. Die Verriegelungskulisse 34 hat vorzugsweise eine Höhe in einer Richtung parallel zur Rotationsachse R von etwa 6,6 mm bis 8,6 mm, insbesondere von etwa 7,6 mm. Das Deckelverriegelungselement 8 ist um eine Rotationsachse R, die beispielsweise mit der Längsachse L des Zubereitungsgefäßes 1 zusammenfällt, zumindest zwischen einer Deckelfreigabeposition und einer Deckelverriegelungsposition rotierbar gelagert. Das Deckelverriegelungselement 8 ist im Wesentlichen ringförmig ausgebildet und ist sowohl relativ zum Deckel 6 als auch relativ zum Zubereitungsraum 5 rotierbar (siehe insbesondere Fig. 2a und Fig. 2b). Damit die Nocken 35 des Deckels 6 gemäß den Fig. 2a bis 2c mit der Deckelverriegelungseinheit 7 bzw. dem Deckelverriegelungselement 8 zusammenwirken können, weist der Innentopf 10 gemäß Fig. 4 und 5 eine der Anzahl der Nocken 35 entsprechende Anzahl an Aussparungen 59 in seinem oberen Rand 73 auf. Die Aussparungen 59 sind bevorzugt paarweise angeordnet, wobei zwischen den Aussparungen 59 eines Paares - ausgehend von der Längsachse L - ein Winkel von etwa 60° ausgebildet ist. Zwischen den Aussparungen 59 der zwei Paare ist jeweils ein Winkel von etwa 120° ausgebildet. Bei dem Ausführungsbeispiel der Fig. 4 und 5 mit einer Erweiterung 42 am Innentopf 10 beträgt beispielsweise ein Winkel zwischen der Erweiterung 42 und der ersten zu der Erweiterung 42 benachbarten Aussparung 59 etwa 60°. Von jeder der benachbarten Aussparungen 59 zur jeweils nächsten Aussparung 59 beträgt der Winkel ebenfalls etwa 60°.

Die Deckelverriegelungseinheit 7 weist an dem Deckelverriegelungselement 8 vier Verriegelungskulissen 34 auf, die mit den Nocken 35 formschlüssig zusammenwirken, um den Deckel 6 so zu verriegeln, dass er den Zubereitungsraum 5 verschließt. Die Verriegelungskulissen 34 sind gemeinsam mit dem Deckelverriegelungselement 8 um die Längsachse L bzw. die Rotationsachse R relativ zum Deckel 6 als auch zum Zubereitungsraum 5 rotierbar. Zum Zusammenwirken mit den am Deckel 6 ausgebildeten Nocken 35 weisen die Verriegelungskulissen 34 jeweils eine Anlaufschräge 36 auf, die bei einer Rotation des Deckelverriegelungselementes 8 in Richtung der Deckelverriegelungsposition eine axiale Verschiebung der Nocken 35 in einer Richtung parallel zur Längsachse L des Zubereitungsgefäßes 1a bewirkt, indem der Deckel 6 an den Nocken 35 in Richtung des Zubereitungsraumes 5 gezogen wird. Die Anlaufschräge 36 weist beispielsweise eine Länge zwischen 13 mm und 17 mm, insbesondere von etwa 15 mm, auf. Bei einer weiteren Rotation des Deckelverriegelungselementes 8 treten die Nocken 35 jeweils in die Ausnehmung 22 des Sperrmittels 19 ein und gleiten anschließend an einer Führungsschräge 47 aus der Ausnehmung 22 heraus, bis sie schließlich jeweils an einer im Wesentlichen orthogonal zur Längsachse L orientierten Verriegelungsfläche 37 anliegen, um den Deckel 6 zu verriegeln. Vorzugsweise sind die Verriegelungsfläche 37 und die erste Sperrfläche 20 um etwa 2,5 mm bis 4,5 mm, insbesondere etwa 3,5 mm, entlang der Rotationsachse R zueinander versetzt angeordnet.

Befindet sich die Deckelverriegelungseinheit 7 gemäß Fig. 2b in der Deckelverriegelungsposition und versucht ein Benutzer, den Deckel 6 durch eine Rotation des Deckelverriegelungselementes 8 in Richtung der Deckelfreigabeposition zu entriegeln, wirkt aber noch eine von dem Zubereitungsraum 5 ausgehende Kraft auf den Deckel 6, werden die Nocken 35 bei einer Bewegung in Richtung der Deckelfreigabeposition gemeinsam mit dem Deckel 6 im Rahmen einer translatorischen Bewegung in die Ausnehmung 22 gedrückt. Durch das formschlüssige Zusammenwirken der Nocken 35 mit zumindest einem Teil der jeweiligen zweiten Sperrfläche 23 wird dann eine weitere Bewegung des Deckelverriegelungselementes 8 in Richtung der Deckelfreigabeposition mechanisch blockiert. Das Sperrmittel 19 befindet sich in der Sperrposition.

Durch diese Funktion wird erfindungsgemäß sichergestellt, dass der Deckel 6 von einem Benutzer nur geöffnet werden kann, wenn keine Speisen mehr heraustreten können. Zudem wird sichergestellt, dass eine Blockierung des Öffnens des Deckels 6 nur dann erfolgt, wenn wirklich eine Kraft auf den Deckel 6 wirkt. Dadurch werden unnötige Wartezeiten für einen Benutzer vermieden. Bei einem Funktionsmodul 6a, insbesondere einem Funktionsmodul 6a, bei dem kein Druck im Zubereitungsraum 5 zu erwarten ist, kann vorgesehen sein, dass über eine Wahl einer Breite der Nocken 35 ein Zusammenwirken mit dem Sperrmittel 19 verhindert wird.

Das rotierbar gelagerte Deckelverriegelungselement 8 stützt sich zumindest in der Deckelverriegelungsposition gemäß Fig. 2c an einer Unterseite eines oberen Randes des Innentopfes 10 ab, um eine Kraftübertragung in einer Richtung parallel zur Längsachse L des Zubereitungsgefäßes 1a bzw. der Rotationsachse R zu erreichen.

An dem Deckelverriegelungselement 8 ist genau ein Anschlagelement 48 - siehe Fig. 10b - ausgebildet, das in der Deckelverriegelungsposition an genau einem Nocken 35, 35b anliegt, um eine weitere Rotation des Deckelverriegelungselementes 8 zu verhindern und dadurch die Deckelverriegelungsposition zu definieren. Das Anliegen ist beispielsweise von einer Steuereinheit der Küchengerätebasis 3 erkennbar. Der Nocken 35,35b ist in einem an dem Deckel 6 - der Deckelunterseite - ausgerichteten Polarkoordinatensystem, bei dem die Längsachse L bzw. die Rotationsachse R den Pol bildet und das Griffstück 45 bei 0° angeordnet ist, etwa auf 240° angeordnet. Der Nocken 35,35b, dessen Anliegen erkennbar ist, ist also einer der Nocken 35, die im Vergleich zu den anderen Nocken am weitesten entfernt zur Abstützeinheit 14 angeordnet ist. Dadurch wird die Zuverlässigkeit des Erkennens des Anliegens gesteigert. Durch die Verwendung von nur einem Anschlagelement 48 ist die Deckelverriegelungsposition eindeutig definiert. Vorzugsweise ist vorgesehen, dass eine Antriebseinheit 15 der Küchengerätebasis 3, mit der vorzugsweise das Deckelverriegelungselement 8 rotierbar ist, eine gesteigerte Stromstärke an einem Motor erfasst und dann den Motor abschaltet. Das Anschlagelement 48 ist als Teil der Verriegelungskulisse 34 ausgebildet und erstreckt sich senkrecht zur Verriegelungsfläche 37.

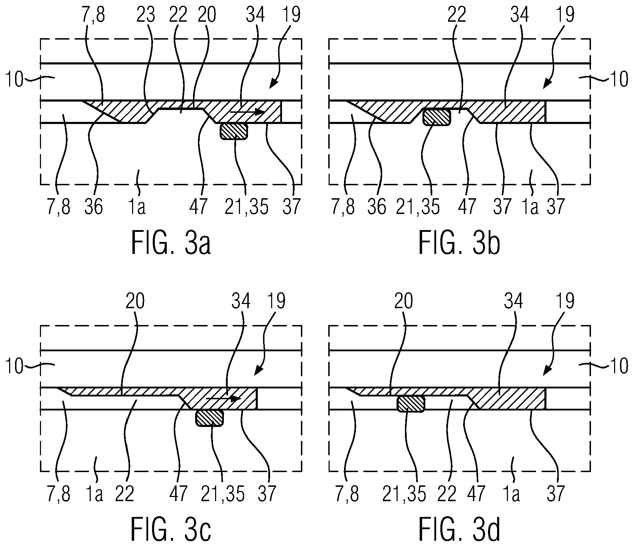

Fig. 3a und Fig. 3b zeigen ein Ausführungsbeispiel eines prinzipiellen Aufbaus eines Sperrmittels 19 in teilweise geschnittener Detailansicht, welches das Funktionsprinzip des Sperrmittels 19 verdeutlicht, das auch in den Fig. 2a bis 2c verwendet wird. Ausgehend von der Deckelsperrposition in Fig. 3a, in der der am Deckel 6 angeordnete Nocken 35 (siehe beispielhaft Fig. 13), an der Sperrfläche 37 anliegt, erfolgt ein Rotieren des Deckelverriegelungselementes 8 gemäß Fig. 3a in Pfeilrichtung nach rechts, wenn das Deckelverriegelungselement 8 in die Deckelfreigabeposition verbracht werden soll. Der Nocken 35 bildet gleichzeitig ein Sperrelement 21 des Sperrmittels 19.

Wirkt nun während der Bewegung des Deckelverriegelungselements 8 in Richtung der Deckelfreigabeposition eine aus dem Zubereitungsraum 5 resultierende Kraft auf den Deckel 6 bzw. zieht ein Benutzer an dem Deckel 6, wandert das Sperrelement 21 bzw. der Nocken 35 durch eine translatorische Bewegung des Deckels 6 in die Ausnehmung 22 des Sperrmittels 19 an der Verriegelungskulisse 34, bis der Nocken 35 an der ersten Sperrfläche 20 und an der zweiten Sperrfläche 23 anliegt. Die erste Sperrfläche 20 begrenzt die translatorische Bewegung des Deckels 6 vom Zubereitungsgefäß 1a weg und die zweite, schräg angeordnete Sperrfläche 23 verhindert mechanisch eine weitere Rotation des Deckelverriegelungselementes 8 in Richtung der Deckelfreigabeposition (siehe Sperrposition gemäß Fig. 3b). Beispielsweise wird diese mechanische Blockade von einer Steuereinheit der Küchengerätebasis 3 erkannt, die eine Rotation des Deckelverriegelungselements 8 zurück in die Deckelverriegelungsposition gemäß Fig. 3a veranlasst.

Fig. 3c und Fig. 3d zeigen ein alternatives Ausführungsbeispiel eines prinzipiellen Aufbaus eines Sperrmittels 19 in teilweise geschnittener Detailansicht. Gemäß Fig. 3c befindet sich der Deckel 6 in der Deckelverriegelungsposition, in der der Nocken 35 des Deckels an der Verriegelungsfläche 37 anliegt. Der Nocken 35 bildet auch hier das Sperrelement 21 des Sperrmittels 19. Wird nun das Deckelverriegelungselement 8 gemäß Fig. 3c nach rechts in Richtung der Deckelfreigabeposition rotiert und wirkt eine vom Zubereitungsraum 5 ausgehende Kraft auf den Deckel 6 bzw. zieht ein Benutzer an dem Deckel 6, erfolgt eine translatorische Bewegung des Deckels 6 und damit des Nockens 35 in die Ausnehmung 22 hinein, bis der Nocken 35 an der ersten Sperrfläche 20 anliegt. Die translatorische Bewegung des Deckels 6 wird beispielsweise von einem - nicht dargestellten - Sensor erfasst und die weitere Bewegung des Deckelverriegelungselementes 8 in Richtung der Freigabeposition gestoppt. Bei diesem Ausführungsbeispiel weist die Ausnehmung 22 keine zweite Sperrfläche 23 auf, die Blockierung erfolgt mittels der Steuereinheit.

Das Deckelverriegelungselement 8 ist - wie beschrieben - gemäß Fig. 2a bis 2c zwischen einer Deckelfreigabeposition und einer Deckelverriegelungsposition rotierbar, um den Deckel 6 mit dem Zubereitungsgefäß 1a zu verriegeln. Um zu verhindern, dass der Deckel 6 während der Bewegung des Deckelverriegelungselementes 8 um die Rotationsachse R des Deckelverriegelungselementes 8 rotiert, weist das Zubereitungsmodul 1 gemäß Fig. 2a bis 2c, 4, 5, 13, 14 und 15 eine Abstützeinheit 14 auf, die derart ausgebildet ist, dass sie eine axiale Bewegung des Deckels 6 in einer Richtung parallel zur Rotationsachse R bzw. zur Längsachse L zulässt, gleichzeitig aber eine Rotation des Deckels 6 verhindert, wenn dieser auf das Zubereitungsgefäß 1a aufgebracht ist. Die Abstützeinheit 14 weist gemäß den Ausführungsbeispielen der Fig. 2a bis 2c, 4, 5, 13 und 15 ein Abstützelement 24 in Form einer Erweiterung 42 an dem Innentopf 10 und ein Abstützgegenelement 25 in Form einer Ausnehmung an dem Deckel 6 auf.

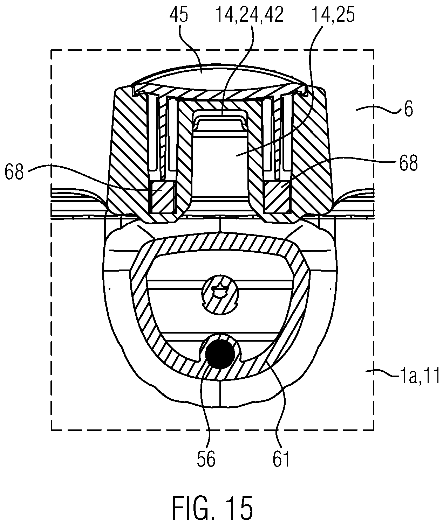

Das Abstützgegenelement 25 und das Abstützelement 24 wirken im aufgebrachten Zustand des Deckels 6 formschlüssig zusammen, so dass der Deckel 6 nicht um die Rotationsachse R rotieren kann, aber in einer Richtung im Wesentlichen parallel zur Rotationsachse R von dem Zubereitungsgefäß 1a entnommen werden kann (siehe insbesondere Fig. 15). Das Abstützelement 24 in Form der Erweiterung 42 kann sich in Höhenrichtung des Abstützgegenelements 25 in Form der Ausnehmung bewegen, insbesondere während einer Verriegelung des Deckels 6 mit dem Zubereitungsgefäß 1a. Die unterschiedlichen Positionen des Abstützelements 24 in dem Abstützgegenelement 25 lassen sich beispielsweise Fig. 2a bis Fig. 2c entnehmen. In der Deckelverriegelungsposition gemäß Fig. 2b ist die Position anders als in der Deckelfreigabeposition gemäß Fig. 2a.

Zusätzlich sind das Abstützelement 24 und das Abstützgegenelement 25 derart ausgebildet, dass der Deckel 6 durch einen Druck auf das Griffstück 45 um eine von dem Abstützelement 24 definierte Achse nach oben verkippt werden kann. Das Abstützelement 24 ist bei diesem Ausführungsbeispiel als im Wesentlichen U-förmige Erweiterung 42 an dem Innentopf 10 ausgebildet. Die Erweiterung 42 ist einstückig mit dem Innentopf 10 ausgebildet. Insbesondere gemäß Fig. 4 und 5 ist die Erweiterung 42 an einem oberen Rand 73 des Innentopfes 10 ausgebildet. Um insbesondere das Einführen des Abstützelementes 24 in das Abstützgegenelement 25 zu vereinfachen, weist das Abstützgegenelement 25 gemäß Fig. 13 zwei gegenüberliegend zueinander ausgebildete Einführschrägen 44 auf, die das Hineingleiten der Erweiterung 42 gemäß Fig. 4 und Fig. 5 beim Aufbringen des Deckels 6 auf das Zubereitungsgefäß 1a vereinfachen (siehe auch Fig. 15). Gemäß Fig. 13 und 15 ist das Abstützgegenelement 25 im Bereich des Griffstücks 45 des Deckels 6 angeordnet.

Fig. 13 zeigt einen Deckel 6 für ein Zubereitungsgefäß 1 von einer Unterseite. Im Bereich des Griffstücks 45 weist der Deckel 6 das Abstützgegenelement 25 in Form einer länglichen Ausnehmung auf, die sich im Wesentlichen parallel zur Rotationsachse R bzw. zur Längsachse L des Zubereitungsgefäßes 1a erstreckt, wenn sich der Deckel 6 auf dem Zubereitungsgefäß 1a befindet. Das Abstützgegenelement 25 dient der Verhinderung einer Rotation des Deckels 6 bei einer Bewegung des Deckelverriegelungselementes 8, indem das Abstützgegenelement 25 mit dem Abstützelement 24 in Form der Erweiterung 42 am Innentopf 10 (siehe Fig. 2a bis 3c, 4, 5 und 9) formschlüssig zusammenwirkt, wenn der Deckel 6 auf ein Zubereitungsgefäß 1a aufgebracht ist. Die vier Nocken 35 erstrecken sich radial nach innen. Jeder Nocken 35 weist eine geneigte Nockenfläche 35a zum Zusammenwirken mit der Anlaufschräge 36 einer Verriegelungskulisse 34 auf (siehe Fig. 2a bis 2c).

In einem an dem Deckel 6 - der Deckelunterseite -- ausgerichteten Polarkoordinatensystem, bei dem die Längsachse L bzw. die Rotationsachse R den Pol bildet und das Griffstück 45 bei 0° angeordnet ist, sind die Nocken 35 etwa bei 60°, 120°, 240° und 300° angeordnet. Der Winkel zwischen dem Griffstück 45 und dem jeweils ersten Nocken 35 auf dem Umfang in beide Richtungen beträgt also etwa 60°. Auch der Winkel zwischen zwei auf einer Seite des Griffstücks 45 benachbarten Nocken 35 beträgt etwa 60°.

Um eine Zentrierung des Deckels 6 auf dem Zubereitungsgefäß 1a zu gewährleisten, weist der Deckel 6 an der Deckelunterseite eine Mehrzahl von Zentrierelementen 72 auf. Gemäß Fig. 13 sind genau fünf Zentrierelemente 72 an dem Deckel 6 ausgebildet. Die Zentrierelemente 72 stehen im Bereich des Rücksprungs 70 von einem inneren Rand 71 des Rücksprungs 70 in Richtung der Längsachse L hervor. Die Zentrierelemente 72 sind insbesondere von einer freien Kante des inneren Randes 71 weggewandt angeordnet. Jedes Zentrierelement 72 erstreckt sich nur über einen Teil der Höhe des inneren Randes 71 in dem Rücksprung 70.

Ein erstes Zentrierelement 72 ist auf dem Umfang des Deckels 6 gegenüberliegend zum Griffstück 45 angeordnet. Ein zweites und ein drittes Zentrierelement 72 sind in einem Polarkoordinatensystem an der Deckelunterseite, in dem die Längsachse L den Pol bildet und das Griffstück bei 0° angeordnet ist, bei Winkeln von etwa 90° und etwa 270° auf dem Umfang angeordnet. Das zweite und dritte Zentrierelement 72 sind vorteilhaft gegenüberliegend zueinander angeordnet. Ferner sind ein viertes und ein fünftes Zentrierelement 72 jeweils auf einer Seite des Abstützgegenelements 25 der Abstützeinheit 14 angeordnet.

Zumindest das zweite und das dritte Zentrierelement 72 weisen jeweils einen Steg 72a auf, der in radialer Richtung von dem Zentrierelement 72 hervorsteht. Der Steg 72a dient vorteilhaft zur axialen Positionierung des Deckels 6 im auf einem Zubereitungsgefäß 1a aufgebrachten Zustand.

Fig. 14 zeigt eine alternative Ausführungsform einer Abstützeinheit 14, die an einer Außenseite des Deckels 6 und des Zubereitungsgefäßes 1a ausgebildet ist. Das Abstützelement 24 wird dabei durch einen Handgriff 61 des Deckels 6 gebildet, wobei das Abstützgegenelement 25 als rechts und links des Handgriffs 61 ausgebildete Stege am Deckel 6 ausgebildet ist. Darüber hinaus ist es auch denkbar, dass das Abstützgegenelement 25 in Form von zwei Stegen am Gehäuse 11 angeordnet ist, und dass das Griffstück 45 als Abstützelement 24 dient.

Fig. 15 zeigt einen Schnitt durch den Handgriff 61 des Zubereitungsgefäßes 1a und zumindest teilweise durch den Deckel 6 im Bereich des Griffstücks 45. Im dargestellten Schnitt ist das Abstützgegenelement 25 in Form einer sich im Wesentlichen parallel zur Längsachse L des Zubereitungsgefäßes 1a erstreckenden Ausnehmung dargestellt, in die das Abstützelement 24 in Form einer von dem Innentopf 10 hervorstehenden Erweiterung 42 eingebracht ist. Die Erweiterung 42 ist im Wesentlichen U-förmig ausgebildet und einstückig mit dem Innentopf 10 verbunden. Die Erweiterung 42 kann sich in vertikaler Richtung gemäß Fig. 15 in dem Abstützgegenelement 25 bewegen. Zum Einführen während des Aufbringens des Deckels 6 weist das Abstützgegenelement 25 die zwei gegenüberliegend angeordnete Einführschrägen 44 auf. Ferner kann der Deckel um eine von dem Abstützelement 24 definierte Achse, beispielsweise durch einen Druck auf das Griffstück 45, verkippt werden, so dass er sich zumindest an einer Deckelseite öffnet.

Im Bereich des Ansatzes des Handgriffs 61 ist ein erstes Identifikationsmittel 56 angeordnet, das als Permanentmagnet ausgebildet ist. Ein Erkennungsmittel 55 an dem Innentopf 10, das insbesondere in einem Leitungsführungs- und Elektronikkanal 60 angeordnet ist, ist dazu ausgebildet, das Vorhandensein und/oder die Ausrichtung des Magneten - dessen Polarisierung - zu erkennen. Dadurch kann die Steuereinheit einer Küchengerätebasis 3 erkennen, ob der Innentopf 10 in einem Gehäuse 11 angeordnet ist oder nicht.

In dem Deckel 6, insbesondere im Griffstück 45, ist ferner ein zweites Identifikationsmittel 68 in Form von zwei Permanentmagneten angeordnet. Das Erkennungsmittel 55 ist zum Erkennen des Vorhandenseins und/oder der Ausrichtung der Permanentmagneten ausgebildet. Durch eine unterschiedliche Ausrichtung - Polarisierung - der Permanentmagneten können beispielsweise bis zu vier unterschiedliche Deckel 6 oder Funktionsmodule 6a erkannt werden.

Durch unterschiedliche Ausrichtung der beiden Permanentmagneten Nord-Süd, Süd-Nord, Nord-Nord und Süd-Süd lassen sich insgesamt vier Kodierungen abfragen, mit denen beispielsweise unterschiedliche Ausführungsformen des Deckels 6 mit dem Erkennungsmittel 55 erkennbar sind. In Abhängigkeit von der Ausführungsform des Deckels 6 ist das zweite Identifikationsmittel 68 in Form der Permanentmagneten vorzugsweise unterschiedlich kodiert. Zudem ist über das Vorhandensein des zweiten Identifikationsmittels 68 erkennbar, dass überhaupt ein Deckel 6 auf das Zubereitungsgefäß 1a aufgebracht ist.

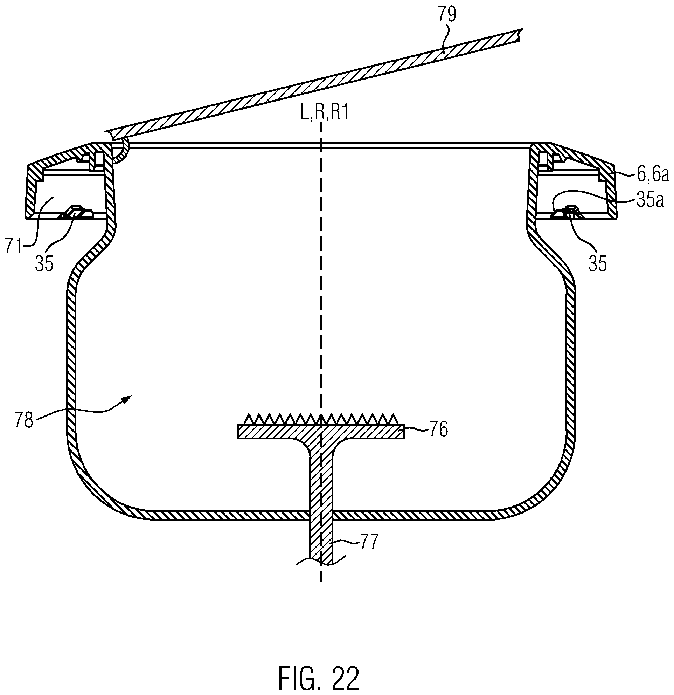

Fig. 22 zeigt ein Ausführungsbeispiel eines Funktionsmoduls 6a in geschnittener Ansicht. Da das Funktionsmodul 6a eine Deckelschnittstelle, hier z. B. mit Nocken 35 an einem inneren Rand 71, zum Zusammenwirken mit der Deckelverriegelungseinheit 7 bzw. dem Deckelverriegelungselement 8 aufweist, handelt es sich um einen Deckel 6, der als Funktionsmodul 6a ausgebildet ist. Das Funktionsmodul 6a weist ein Zubehörwerkzeug 76 auf, dass über eine Verbindungsschnittstelle 77 mit einem Werkzeug 26a und/oder einem Werkzeughalter 26 eines Zubereitungsgefäßes 1a (siehe z. B. Fig. 5) mechanisch koppelbar ist, insbesondere um ein Drehmoment auf das Zubehörwerkzeug 76 zu übertragen. Dadurch ist das Zubehörwerkzeug 76 um die Rotationsachse R1 rotierbar, die hier mit der Längsachse L und der Rotationsachse R zusammenfällt. Ein Innenraum 78 des Funktionsmoduls 6a ist mit einem von dem Funktionsmodul 6a abnehmbaren und/oder verschwenkbar gelagerten Abdeckelement 79 verschließbar. Im montierten Zustand ragt das Funktionsmodul 6a teilweise in den Zubereitungsraum 5 eines Zubereitungsgefäßes 1a bzw. eines Innentopfes 10 hinein.

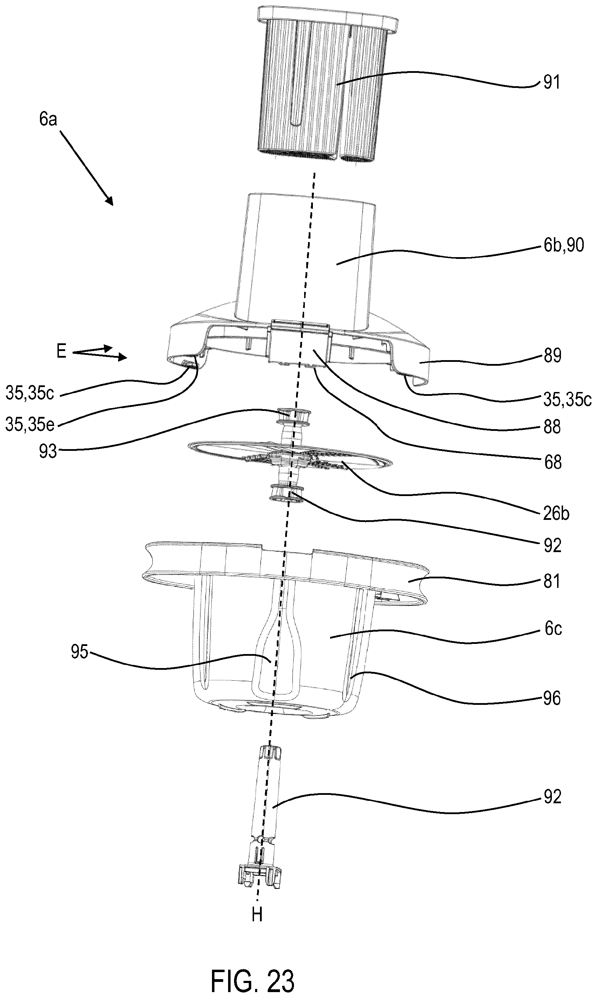

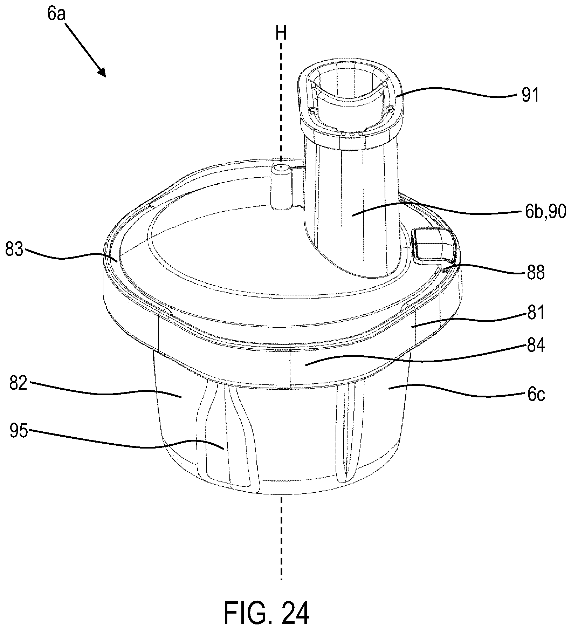

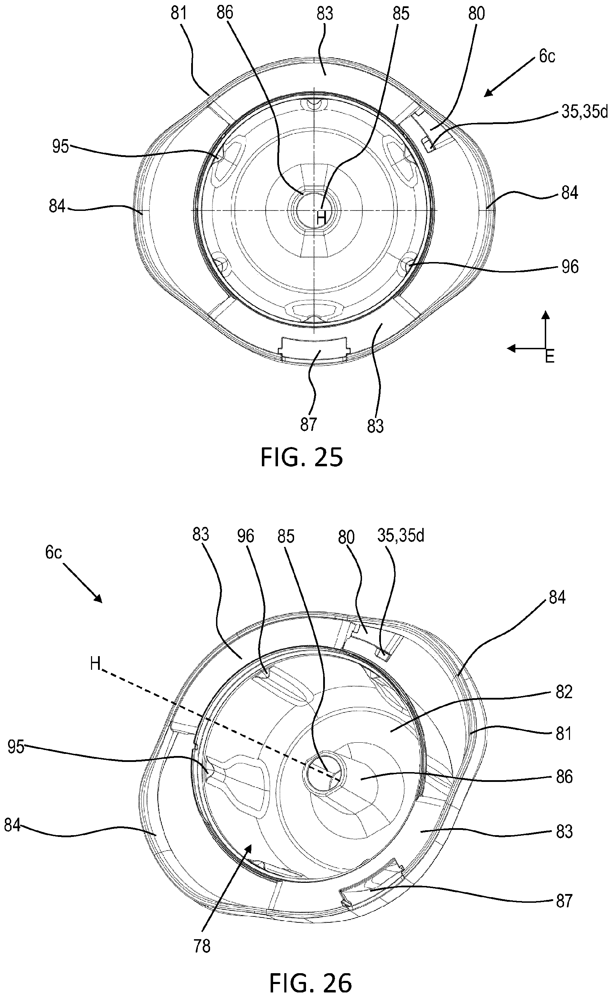

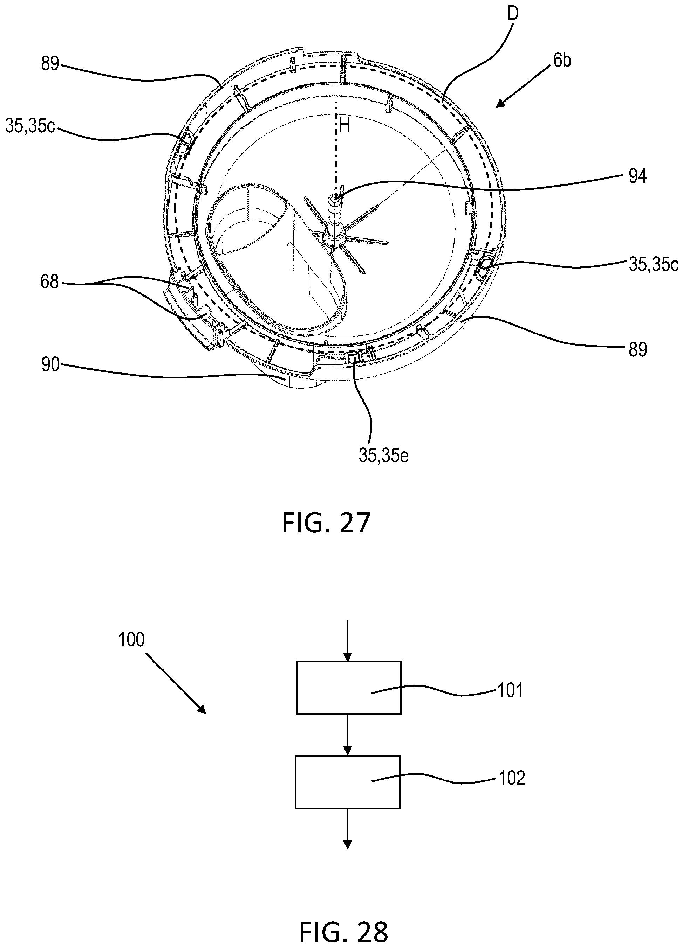

Fig. 23 und Fig. 24 zeigen ein weiteres Ausführungsbeispiel eines Funktionsmoduls 6a. Fig. 23 zeigt das Funktionsmodul 6a in einer Explosionsansicht, Fig. 24 im zusammengefügten Zustand. Fig. 25 und Fig. 26 zeigen einen zweiten Modulkörper 6c des Ausführungsbeispiels gemäß Fig. 23 und Fig. 24 in Draufsicht sowie in perspektivischer Ansicht von oben. Fig. 27 zeigt das Ausführungsbeispiel eines ersten Modulkörpers 6b gemäß Fig. 23 und Fig. 24 in perspektivischer Ansicht von unten.

Das Funktionsmodul 6a gemäß Fig. 23 und Fig. 24 ist beispielsweise in einem Zubereitungsgefäß 1a eines Zubereitungsmoduls 1 gemäß Fig. 1 oder gemäß Fig. 4 anordenbar. Das Funktionsmodul 6a erstreckt sich in einer Höhenrichtung H und weist einen ersten Modulkörper 6b und einen zweiten Modulkörper 6c auf (siehe Fig. 25 bis Fig. 27). Der erste Modulkörper 6b weist bei diesem Ausführungsbeispiel, insbesondere gemäß Fig. 27, insgesamt drei Verriegelungsvorsprünge 35 auf, die auch als Nocken 35 bezeichnet werden können. Zwei der Verriegelungsvorsprünge 35 können als erste Verriegelungsvorsprünge 35c bzw. Verriegelungsvorsprünge 35c erster Art bezeichnet werden. Der dritte Verriegelungsvorsprung 35e kann als Verriegelungsvorsprung 35e dritter Art bezeichnet werden. Die zwei ersten Verriegelungsvorsprünge 35c sind bei diesem Ausführungsbeispiel breiter als der dritte Verriegelungsvorsprung 35e ausgebildet. Mit Breite ist hier die Erstreckung in einer Umfangsrichtung um die Höhenrichtung H gemeint.

Vorzugsweise sind die ersten Verriegelungsvorsprünge 35c so breit ausgebildet, dass sie bei Verwendung mit einem Zubereitungsgefäß, beispielsweise gemäß Fig. 2a bis 2c, nicht in die Ausnehmungen 22 des Deckelverriegelungselementes 8 bzw. des Funktionsmodulverriegelungselementes 8 eindringen können und damit nicht in die Sperrposition gelangen können.

Der zweite Modulkörper 6c weist bei diesem Ausführungsbeispiel gemäß Fig. 25 und Fig. 26 genau einen Verriegelungsvorsprung 35 auf. Der Verriegelungsvorsprung 35 kann ferner als zweiter Verriegelungsvorsprung 35d bezeichnet werden, der schmaler als die ersten Verriegelungsvorsprünge 35c, aber breiter als der dritte Verriegelungsvorsprung 35e ausgebildet ist. Der Verriegelungsvorsprung 35 des zweiten Modulkörpers 6c ist an einem Ansatz 80 angeordnet, der an einem Innenumfang eines Stützrings 81 des zweiten Modulkörpers 6c ausgebildet ist. Der zweite Modulkörper 6c ist im Wesentlichen topfartig ausgebildet bzw. weist einen topfartigen Grundkörper 82 auf, an dessen oberem Rand der Stützring 81 mittels Stegen 83 angeordnet ist. Der Stützring 81 bildet zwei gegenüberliegend angeordnete Griffbereiche 84 aus. Der zweite Modulkörper 6c kann in den Griffbereich 84 von einem Benutzer angehoben werden. Der Grundkörper 82 ist zur Aufnahme von Flüssigkeit ausgebildet und weist eine zentrale Ausnehmung 85 auf, die durch eine Umlaufwand 86 umgeben ist. Die Ausnehmung 85 mit der Umlaufwand 86 durchtritt den zweiten Modulkörper 6c im Wesentlichen zentral.

Der zweite Modulkörper 6c weist, insbesondere in einem der Stege 83, eine Riegelausnehmung 87 auf, die im montierten Zustand (siehe beispielsweise Fig. 24) von einem Riegelvorsprung 88 des ersten Modulkörpers 6b durchtreten wird. Zusätzlich zur Festlegung der Ausrichtung des ersten Modulkörpers 6b in Bezug auf den zweiten Modulkörper 6c im zusammengefügten Zustand gewährleistet das formschlüssige Zusammenwirken der Riegelausnehmung 87 und des Riegelvorsprungs 88 eine Drehmomentstütze, so dass der erste Modulkörper 6b nicht relativ zum zweiten Modulkörper 6c rotiert werden kann, insbesondere nicht um die Höhenrichtung H.

Die Verriegelungsvorsprünge 35 sind derart an dem ersten Modulkörper 6b und dem zweiten Modulkörper 6c angeordnet, dass sie im zusammengefügten Zustand an einer gemeinsamen Ebene E angeordnet sind, die sich orthogonal zur Höhenrichtung H erstreckt. Insbesondere liegen bei diesem Ausführungsbeispiel alle Verriegelungsvorsprünge 35 mit einer Unterseite - mit einer unteren Fläche - an der Ebene E an. Da bei diesem Ausführungsbeispiel alle Verriegelungsvorsprünge 35 in Bezug auf die Höhenrichtung H gleich hoch sind, liegen die Oberseiten der Verriegelungsvorsprünge 35 in einer zur Ebene E parallelen, gedachten Ebene. Ferner liegen im montierten Zustand alle Verriegelungsvorsprünge 35 mit einer in Richtung der Höhenrichtung H weisenden Stirnfläche tangential an einem gemeinsamen Durchmesser D an, der beispielhaft als gestrichelte Linie in Fig. 27 gezeigt ist. Dadurch ist gewährleistet, dass die Verriegelungsvorsprünge 35 des ersten Modulkörpers 6b und des zweiten Modulkörpers 6c, beispielsweise wie in Bezug auf die Figur 2a bis 2c und 3a bis 3d beschrieben, mit einem Zubereitungsgefäß 1a zusammenwirken können, insbesondere mit dessen Deckelverriegelungselement 8 bzw. Funktionsmodulverriegelungselement 8, um beide Modulkörper 6b, 6c des Funktionsmoduls 6a am Zubereitungsgefäß 1a zu verriegeln.

Wie insbesondere aus Fig. 27 ersichtlich, sind die beiden ersten Verriegelungsvorsprünge 35c gegenüberliegend am Durchmesser D zueinander angeordnet. Der erste Modulkörper 6b ist deckelartig ausgebildet und derart auf den zweiten Modulkörper 6c aufsetzbar, dass der Grundkörper 82 verschlossen wird und der Riegelvorsprung 88 in die Riegelausnehmung 87 eingreift (siehe insbesondere Fig. 24). Bei dem ersten Modulkörper 6b sind die Vorsprünge 35 gemäß Fig. 27 an einem Innenumfang eines Kragens 89 angeordnet und erstrecken sich in Richtung der Höhenrichtung H.

Im in einem Zubereitungsmodul 1 bzw. einem Zubereitungsgefäß 1a angeordneten Zustand ist die Höhenrichtung H bei diesem Ausführungsbeispiel koaxial zu den Achsen L, R und R1 - siehe Beschreibung zu den voranstehenden Figuren - angeordnet.

Der erste Modulkörper 6b weist einen Zuführabschnitt 90 auf, der im montierten Zustand einen Zugang zum Grundkörper 82 bzw. dem Innenraum 78 des Funktionsmoduls 6a bereitstellt, um Speisen bzw. Zutaten von Speisen einzubringen. Bei diesem Ausführungsbeispiel umfasst das Funktionsmodul 6a ferner einen Presskörper 91, um Speisen durch den Zuführabschnitt 90 auf ein Zubehörwerkzeug 76 (siehe Fig. 23) zu pressen, um dieses beispielsweise zum Schneiden oder zum Reiben von Speisen zu verwenden. Das Zubehörwerkzeug 76 ist im montierten Zustand in einer zur Ebene E parallelen Ebene angeordnet.

Um das Zubehörwerkzeug 76 anzutreiben, ist eine Verbindungsschnittstelle 77 - auch als Adapterelement bezeichnet - vorgesehen, die im montierten Zustand mit einem Zubehörwerkzeug 76 des Zubereitungsgefäßes 1a (siehe beispielsweise Fig. 5) formschlüssig zusammenwirkt, um ein Drehmoment auf eine Antriebsschnittstelle 92 des Zubehörwerkzeugs 76 zu übertragen. Das Zubehörwerkzeug 76 stützt sich bei diesem Ausführungsbeispiel mit einem Stützabschnitt 93 an einem Dorn 94 an der Unterseite des ersten Modulkörpers 6b ab. Das Adapterelement 92 durchtritt den zweiten Modulkörper 6c zentral in der Ausnehmung 85.

Insbesondere um im Betrieb des Funktionsmoduls 6a in einem Zubereitungsgefäß 1a gemäß der voranstehenden Figuren eine Rotation des Funktionsmoduls 6a relativ zum Zubereitungsgefäß 1a zu verhindern, weist das Funktionsmodul 6a, hier der zweite Modulkörper 6c, auf einem Außenumfang 3 drei Ausnehmungen 95 auf, die im in das Zubereitungsgefäß 1a - beispielsweise gemäß Fig. 4 oder 5 - eingebrachten Zustand formschlüssig mit in dem Zubereitungsraum hervorstehenden Vorsprüngen 97 (siehe beispielsweise Fig. 4 und 5) zusammenwirken, um eine Rotation um die Achsen L, R bzw. die Höhenrichtung H zu verhindern. Die Ausnehmungen 95 weisen in Höhenrichtung H eine abnehmende Breite auf, um ein Zentrieren des zweiten Modulkörpers 6c beim Einbringen in ein Zubereitungsgefäß 1a (siehe Fig. 4 und Fig. 5) zu gewährleisten. Die Anordnung dieser Ausnehmungen gewährleistet zudem, dass das Funktionsmodul 6a in maximal zwei Ausrichtungen, vorzugsweise nur in einer, Ausrichtung, in das Zubereitungsgefäß 1a einsetzbar ist.

Gemäß Fig. 26 weist der zweite Modulkörper 6c in seinem Innenraum 78 drei Stützvorsprünge 96 auf, an denen ein Zubehörwerkzeug 76 oder eine - nicht dargestellte - Werkzeugeinheit oder Getriebeeinheit abgestützt werden kann. Zudem sind an den Innenseiten der Ausnehmungen 95 ebenfalls Stützflächen vorgesehen, die in einer Ebene mit den Stützvorsprüngen 96 angeordnet sind, um eine Werkzeugeinheit oder eine Getriebeeinheit gleichmäßig über den abzustützen.

Das Funktionsmodul 6a weist gemäß Fig. 27 ein zweites Identifikationsmittel 68 in Form von zwei Permanentmagneten auf. Ein Erkennungsmittel 55, beispielsweise ein 3D-Hall-Sensor, des Küchengeräts 4 (siehe Fig. 5) ist zum Erkennen des Vorhandenseins und/oder der Ausrichtung der Permanentmagneten ausgebildet. Durch eine unterschiedliche Ausrichtung - Polarisierung - der Permanentmagneten können beispielsweise bis zu vier unterschiedliche Deckel 6 oder Funktionsmodule 6a erkannt werden.

Fig. 28 zeigt ein Ausführungsbeispiel eines schematischen Ablaufs eines erfindungsgemäßen Verfahrens 100 zum Erkennen einer ordnungsgemäßen Anordnung eines Funktionsmoduls 6a, insbesondere gemäß einem der beschriebenen Ausführungsbeispiele, auf einem Zubereitungsgefäß 1a gemäß einem der beschriebenen Ausführungsbeispiele. Das Funktionsmodul 6a weist mindestens einen ersten Modulkörper 6b mit mindestens einem Verriegelungsvorsprung 35 und mindestens einen zweiten Modulkörper 6c mit mindestens einem Verriegelungsvorsprung 35 auf. Gemäß dem Verfahren 100 erfolgt zunächst ein Veranlassen 101 einer Bewegung eines Funktionsmodulverriegelungselementes 8 durch eine Steuereinrichtung 98 (siehe Fig. 1) des Küchengerätes 4. Insoweit wird verwiesen auf die Beschreibung auch zu den Figuren 2a bis 2c sowie 3a bis 3d.

Während oder nach dem Veranlassen 101 erfolgt ein Erkennen 102 einer ordnungsgemäßen Anordnung des Funktionsmoduls 6a, insbesondere des zweiten Modulkörpers 6c, durch einen Kontakt zwischen dem Funktionsmodulverriegelungselement 8 und mindestens einem Verriegelungsvorsprung 35, hier dem zweiten Verriegelungsvorsprung 35d gemäß Fig. 25 und 26. Alternativ dazu erfolgt ein Erkennen 102 einer nicht ordnungsgemäßen Anordnung des Funktionsmoduls 6a, insbesondere ein Nichtvorhandensein des zweiten Modulkörpers 6c, wenn das Funktionsmodulverriegelungselement 8, insbesondere wie für Fig. 2a bis 2c bzw. Fig. 3a bis 3d beschrieben, über mindestens eine Position hinausbewegt werden kann, in der ein Kontakt mit einem Verriegelungsvorsprung 35, hier dem zweiten Verriegelungsvorsprung 35d des zweiten Modulkörpers 6c, erwartet wird. Sofern der Kontakt mit dem zweiten Verriegelungsvorsprung 35d fehlt, wird das Funktionsmodulverriegelungselement 8 zurück in die Funktionsmodulfreigabeposition bewegt und an der Anzeigeeinrichtung 3b eine Fehlermeldung ausgegeben. Dadurch kann vorteilhaft sichergestellt werden, dass ein Benutzer das Funktionsmodul 6a nicht ohne den zweiten Modulkörper 6c verwendet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

**Bezugszeichenliste**

| | | | |
|---|---|---|---|
| 1 | Zubereitungsmodul | 20 | erste Sperrfläche |
| 1a | Zubereitungsgefäß | 21 | Sperrelement |
| 2 | Aufnahmebereich | 22 | Ausnehmung |
| 2a | Betätigungseinheit | 23 | zweite Sperrfläche |
| 3 | Küchengerätebasis | 24 | Abstützelement |
| 3a | Oberseite von 3 | 25 | Abstützgegenelement |
| 3b | Anzeige- und Eingabevorrichtung | 26 | Werkzeughalter |
| 4 | Küchengerät | 26a | Werkzeug |
| 5 | Zubereitungsraum | 26b | Werkzeug |
| 6 | Deckel | 27 | Verriegelungseinheit |
| 6a | Funktionsmodul | 28 | Träger |
| 6b | erster Modulkörper | 29 | Verriegelungsring |
| 6c | zweiter Modulkörper | 30 | Außenring |
| 7 | Deckelverriegelungseinheit | 31 | Haltesteg |
| 8 | Funktionsmodulverriegelungselement | 32 | elektrische Gegenschnittstelle |
| | | 33 | Betätigungsgriff |
| 9 | elektrische Schnittstelle von 1a | 33a | alternativer Betätigungsgriff |
| 10 | Innentopf | 34 | Verriegelungskulisse |
| 11 | Gehäuse | 35 | Verriegelungsvorsprung/ Nocken |
| 12 | Gegenelement | | |
| 13 | Übertragungselement | 35a | Nockenfläche |
| 14 | Abstützeinheit | 35b | Nocken für Erkennung |
| 15 | Antriebseinheit | 35c | erster Verriegelungsvorsprung |
| 15a | Motor | 35d | zweiter Verriegelungsvorsprung |
| 15b | Zahnrad | 35e | dritter Verriegelungsvorsprung |
| 16 | Betätigungselement | 36 | Anlaufschräge |
| 17 | Halteelement | 37 | Verriegelungsfläche |
| 17a | Haltefläche | 38 | Haken |
| 18 | Mitnehmerelement | 39 | Einführelement |
| 19 | Sperrmittel | 40 | Kontaktabdeckung |
| 41 | Steg | 69 | Vorsprung |
| 42 | Erweiterung | 70 | Rücksprung |
| 43 | Unterer Rand | 71 | Innerer Rand |
| 43a | Stirnseite von 43 | 72 | Zentrierelemente |
| 44 | Einführschräge | 72a | Steg |
| 45 | Griffstück | 73 | Oberer Rand |
| 45a | erstes Griffstückelement | 74 | Rippe |
| 45b | zweites Griffstückelement | 75 | Gegenrippe |
| 46 | Endanschlag | 76 | Zubehörwerkzeug |
| 47 | Führungsschräge | 77 | Verbindungsschnittstelle |
| 48 | Anschlagelement | 78 | Innenraum |
| 49 | Erstes Rückstellmittel | 79 | Abdeckelement |
| 50 | Zweites Rückstellmittel | 80 | Ansatz |
| 51 | Wirkabschnitt | 81 | Stützring |
| 52 | Mitnehmergegenelement | 82 | Grundkörper |
| 53 | Mitnehmergegenfläche | 83 | Stege |
| 54 | Rückstellfläche | 84 | Griffbereiche |
| 55 | Erkennungsmittel | 85 | Ausnehmung |
| 56 | Erstes Identifikationsmittel | 86 | Umlaufwand |
| 57 | Werkzeugschnittstelle | 87 | Riegelausnehmung |
| 58 | Lagerstelle von 12 | 88 | Riegelvorsprung |
| 59 | Aussparungen | 89 | Kragen |
| 60 | Leitungsführungs- und Elektronikkanal | 90 | Zuführabschnitt |
| | | 91 | Presskörper |
| 61 | Handgriff | 92 | Antriebsschnittstelle |
| 62 | Lagerstellen von 8 | 93 | Stützabschnitt |
| 63 | Ausnehmung | 94 | Dorn |
| 64 | Stützelement | 95 | Ausnehmungen |
| 65 | Nut | 96 | Stützvorsprung |
| 66 | Führungsstück | 97 | Vorsprünge |
| 67 | Aufnahme für Rückstellmittel | 98 | Steuereinrichtung |
| 68 | Zweites Identifikationsmittel | | |
| 100 | Verfahren | | |
| 101 | Veranlassen | | |
| 102 | Erkennen | | |
| U | Umfang | | |
| D | Durchmesser | | |
| E | Ebene | | |
| H | Höhenrichtung | | |
| L | Längsachse | | |
| R | Rotationsachse | | |
| R1 | Rotationsachse von 16 | | |

## Patentansprüche

1. Funktionsmodul (6a) für ein Zubereitungsgefäß (1a) eines Zubereitungsmoduls (1) für ein Küchengerät (4), wobei sich das Funktionsmodul (6a) in einer Höhenrichtung (H) erstreckt, wobei das Funktionsmodul (6a) mindestens einen ersten Modulkörper (6b) aufweist, und wobei der erste Modulkörper (6b) mindestens einen Verriegelungsvorsprung (35) aufweist,
**dadurch gekennzeichnet, dass**
mindestens ein zweiter Modulkörper (6c) vorhanden ist, dass der zweite Modulkörper (6c) mindestens einen Verriegelungsvorsprung (35) aufweist, dass der erste Modulkörper (6b) und der zweite Modulkörper (6c) derart zusammenfügbar sind, dass der Verriegelungsvorsprung (35) des ersten Modulkörpers (6b) an oder in einer gemeinsamen Ebene (E) und der Verriegelungsvorsprung (35) des zweiten Modulkörpers (6c) an oder in der Ebene (E) angeordnet ist, und dass die Ebene (E) orthogonal zur Höhenrichtung (H) ausgerichtet ist.

2. Funktionsmodul (6a) nach Anspruch 1,
**dadurch gekennzeichnet, dass**
die Verriegelungsvorsprünge (35) derart am ersten Modulkörper (6b) und am zweiten Modulkörper (6c) angeordnet sind, dass der Verriegelungsvorsprung (35) des ersten Modulkörpers (6b) und der Verriegelungsvorsprung (35) des zweiten Modulkörpers (6c) im zusammengefügten Zustand in oder an einem gemeinsamen Durchmesser (D) angeordnet sind.

3. Funktionsmodul (6a) nach Anspruch 1 oder 2,
**dadurch gekennzeichnet, dass**
die Verriegelungsvorsprünge (35) derart am ersten Modulkörper (6b) und am zweiten Modulkörper (6v) angeordnet sind, dass der Verriegelungsvorsprung (35) des ersten Modulkörpers (6b) und der Verriegelungsvorsprung (35) des zweiten Modulkörpers (6c) im zusammengefügten Zustand auf einem inneren Umfang (U) des Funktionsmoduls gegenüberliegend zueinander angeordnet sind.

4. Funktionsmodul (6a) nach einem der Ansprüche 1 bis 3,
**dadurch gekennzeichnet, dass**
der erste Modulkörper (6b) mindestens zwei erste Verriegelungsvorsprünge (35,35c) aufweist, dass der zweite Modulkörper (6c) mindestens oder genau einen zweiten Verriegelungsvorsprung (35d) aufweist, und dass die ersten Verriegelungsvorsprünge (35c) breiter ausgebildet sind als der zweite Verriegelungsvorsprung (35d), insbesondere dass der erste Modulkörper (6b) zusätzlich mindestens oder genau einen dritten Verriegelungsvorsprung (35e) aufweist, und dass der dritte Verriegelungsvorsprung (35e) schmaler als der zweite Verriegelungsvorsprung (35d) und/oder schmaler als die zweiten Verriegelungsvorsprünge (35c) ausgebildet ist.

5. Funktionsmodul (6a) nach einem der Ansprüche 1 bis 4,
**dadurch gekennzeichnet, dass**
der erste Modulkörper (6b) und der zweite Modulkörper (6c) formschlüssig zusammenfügbar sind, insbesondere dass der erste Modulkörper (6b) und der zweite Modulkörper (6c) ineinandergreifen und/oder insbesondere dass der erste Modulkörper (6b) den zweiten Modulkörper (6c) im zusammengefügten Zustand zumindest teilweise überdeckt und/oder durchgreift.

6. Funktionsmodul (6a) nach einem der Ansprüche 1 bis 5,
**dadurch gekennzeichnet, dass**
der erste Modulkörper (6b) und/oder der zweite Modulkörper (6c) mindestens ein Identifikationsmittel (56) aufweisen, insbesondere mindestens einen Magneten und/oder mindestens einen RFID-Chip aufweist.

7. Funktionsmodul (6a) nach einem der Ansprüche 1 bis 6,
**dadurch gekennzeichnet, dass**
mindestens ein Werkzeug (26b) und/oder mindestens eine Getriebeeinheit vorhanden ist, insbesondere dass das Werkzeug (26b) und/oder die Getriebeeinheit im zusammengefügten Zustand zwischen dem ersten Modulkörper (6b) und dem zweiten Modulkörper (6c) anordenbar sind/ist.

8. Funktionsmodul (6a) nach einem der Ansprüche 1 bis 7,
**dadurch gekennzeichnet, dass**
mindestens ein Abstützgegenelement (25) zum formschlüssigen Zusammenwirken mit dem Zubereitungsgefäß (1a) vorhanden ist, insbesondere dass das Abstützgegenelement (25) zumindest teilweise am ersten Modulkörper (6b) und/oder zumindest teilweise am zweiten Modulkörper (6c) ausgebildet ist.

9. Zubereitungsmodul (1) zum Anordnen in einem Aufnahmebereich (2) einer Küchengerätebasis (3) eines Küchengeräts (4), mit mindestens einem Zubereitungsgefäß (1a), mindestens einem Funktionsmodul (6a) und mindestens einem Funktionsmodulverriegelungselement (8), wobei das Zubereitungsgefäß (1a) mindestens einen Zubereitungsraum (5) zur Aufnahme zumindest einer Zutat einer Speise aufweist, und wobei das Funktionsmodulverriegelungselement (8) um eine Rotationsachse (R) zumindest zwischen einer Funktionsmodulfreigabeposition und einer Funktionsmodulverriegelungsposition rotierbar ist,
**dadurch gekennzeichnet, dass**
das Funktionsmodul (6a) mindestens einen ersten Modulkörper (6b) aufweist, dass der erste Modulkörper (6b) mindestens einen Verriegelungsvorsprung (35) aufweist, dass das Funktionsmodul (6a) mindestens einen zweiten Modulkörper (6c) aufweist, dass der zweite Modulkörper (6c) mindestens einen Verriegelungsvorsprung (35) aufweist, und dass der erste Modulkörper (6b) und der zweite Modulkörper (6c) derart an dem Zubereitungsgefäß (1a) anordenbar sind, dass beide Verriegelungsvorsprünge (35) mit dem Funktionsmodulverriegelungselement (8) zusammenwirken können.

10. Zubereitungsmodul (1) nach Anspruch 9
**gekennzeichnet durch,**
den Merkmalsinhalt mindestens eines Kennzeichnungsteils oder mehrerer Kennzeichnungsteile der Ansprüche 1 bis 8.

11. Küchengerät (4) mit mindestens einer Küchengerätebasis (3) und mindestens einem Zubereitungsmodul (1) nach einem der Ansprüche 9 oder 10, wobei die Küchengerätebasis (3) mindestens einen Aufnahmebereich (2) für das Zubereitungsgefäß (1a) aufweist, wobei die Küchengerätebasis (3) mindestens eine Steuereinheit aufweist, und dass die Steuereinheit dazu eingerichtet und ausgebildet ist, insbesondere unter Verwendung des Funktionsmodulverriegelungselements (8) zu erkennen, ob der erste Modulkörper (6b) und/oder der zweite Modulkörper (6c) vorhanden sind/ist.

12. Küchengerät (4) nach Anspruch 11,
**dadurch gekennzeichnet, dass**
die Steuereinheit dazu eingerichtet und ausgebildet ist, unter Verwendung des Funktionsmodulverriegelungselements (8) zu erkennen, ob der erste Modulkörper (6b) und/oder der zweite Modulkörper (6c) vorhanden sind/ist, indem erkannt wird, ob der Verriegelungsvorsprung (35) des ersten Modulkörpers (6b) und/oder der Verriegelungsvorsprung (35) des zweiten Modulkörpers (6c) vorhanden sind/ist.

13. Küchengerät (4) nach Anspruch 12,
**dadurch gekennzeichnet, dass**
die Steuereinheit ferner dazu ausgebildet und eingerichtet ist, das Funktionsmodulverriegelungselement (8) wieder in Richtung der Funktionsmodulfreigabeposition zu bewegen, wenn der Verriegelungsvorsprung (35) des ersten Modulkörpers (6b) und/oder der Verriegelungsvorsprung (35) des zweiten Modulkörpers (6c) nicht vorhanden sind/ist, insbesondere ferner dazu ausgebildet ist, mindestens eine Fehlermeldung an einer Anzeigevorrichtung (3b) auszugeben.

14. Küchengerät (4) nach einem der Ansprüche 11 bis 13,
**dadurch gekennzeichnet, dass**
das Vorhandensein erkannt wird, indem die Steuereinheit überprüft, ob das Funktionsmodulverriegelungselement (8) gegen mindestens oder genau einen Verriegelungsvorsprung (35) zur Anlage kommt oder ob das Funktionsmodulverriegelungselement (35) über eine erwartete Position hinausbewegt werden kann, in der ein Kontakt mit einem Verriegelungsvorsprung (35) erwartet wird.

15. Verfahren (100) zum Erkennen einer ordnungsgemäßen Anordnung eines Funktionsmoduls (6a), insbesondere nach einem der Ansprüche 1 bis 9, auf einem Zubereitungsgefäß (1a) eines Küchengeräts (4), insbesondere nach einem der Ansprüche 11 bis 14, wobei das Funktionsmodul (6a) mindestens einen ersten Modulkörper (6b) mit mindestens einem Verriegelungsvorsprung (35) und mindestens einen zweiten Modulkörper (6c) mit mindestens einem Verriegelungsvorsprung (35) aufweist, zumindest umfassend die folgenden Verfahrensschritte:
- Veranlassen (101) einer Bewegung eines Funktionsmodulverriegelungselements (8) durch eine Steuereinrichtung (98) des Küchengeräts (8),
- Erkennen (102) einer ordnungsgemäßen Anordnung des Funktionsmoduls (6a), insbesondere des ersten Modulkörpers (6b) und/oder des zweiten Modulkörpers (6c), durch einen Kontakt zwischen dem Funktionsmodulverriegelungselement (8) und mindestens einem Verriegelungsvorsprung (35) oder
- Erkennen (102) einer nicht ordnungsgemäßen Anordnung des Funktionsmoduls (6a), insbesondere des ersten Modulkörpers (6b) und/oder des zweiten Modulkörpers (6c), durch Bewegen des Funktionsmodulverriegelungselements (8) über mindestens eine Position hinaus, in der ein Kontakt mit einem Verriegelungsvorsprung (35) erwartet wird.
